(19) Europäisches Patentamt
European Patent Office
Office européen des brevets

(11) EP 4 509 569 A1

(12) EUROPEAN PATENT APPLICATION

(43) Date of publication:
**19.02.2025 Bulletin 2025/08**

(21) Application number: **24194742.3**

(22) Date of filing: **15.08.2024**

(51) International Patent Classification (IPC):
***C09D 11/101*** *(2014.01)* ***B41M 3/14*** *(2006.01)*

(52) Cooperative Patent Classification (CPC):
**C09D 11/101; B41M 3/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sicpa Holding SA**
**1008 Prilly (CH)**

(72) Inventors:
- **HOFSTETTER, Pierre-Yves**
**1040 Villars-le-Terroir (CH)**
- **KARASU KILIC, Feyza**
**1004 Lausanne (CH)**
- **VEYA, Patrick**
**1123 Aclens (CH)**

(74) Representative: **GatesIP**
**Dorfplatz 1**
**6060 Sarnen (CH)**

# (54) RADIATION-CURABLE RADICAL-CURING PROTECTIVE VARNISHES FOR SECURITY DOCUMENTS

(57) The invention provides a radiation-curable protective varnish showing good anti-soiling and durability characteristics.

EP 4 509 569 A1

## Description

## FIELD OF THE INVENTION

The present invention relates to the field of varnishes for protecting security documents, such as banknotes, against premature detrimental influence of contaminants and/or moisture during use.

## BACKGROUND OF THE INVENTION

It is known to provide security documents, in particular banknotes, with dirt-repellent protective coatings to extend their life and fitness for circulation. Protective coatings are protective layers facing the environment, which are obtained from thermally (solvent-containing) curable varnishes, radiation-curable varnishes, or combinations thereof.

WO2013045496A1 discloses radically-curing UV-curable protective varnishes that are said to provide good protective qualities to security documents.

WO2014/067715A1 discloses radiation-curable protective varnishes that comprise certain perfluoropolyether surfactants (classified as per or polyfluoroalkyl substances or "PFAS"). The disclosed protective varnishes are said to show excellent anti-soiling and durability characteristics.

The increasing sensitivity of the public to environmental concerns, as well as the necessary responsiveness of the chemical industry to environmental regulations, have motivated the industry to attempt to develop protective varnishes that contain no or a significantly reduced amount of PFAS.

Thus, there remains a need for a radically-curable, radiation-curable protective varnish for providing protective coatings for security documents at high speed (i.e. industrial speed), which extends their life and fitness for circulation, wherein said radically-curable, radiation-curable varnish exhibits optimal curing properties, does not contain PFAS, and shows good anti-soiling and durability characteristics.

## SUMMARY OF THE INVENTION

In a first aspect, the invention provides a radiation-curable protective varnish comprising:

a) from about 25 wt% to about 95 wt%, preferably from about 30 wt% to about 85 wt%, more preferably from about 35 wt% to about 75 wt% of a mixture of (meth)acrylates, other than polysiloxanes, selected from those having a (meth) acrylate functionality of two or more, preferably a mixture of di(meth)acrylates and tri(meth)acrylates;
b) from about 0.5 wt% to about 5 wt% of a (meth)acrylated polysiloxane having a number average molecular weight between about 1,000 and about 8,000 g/mol eq PS;
c) from about 0.5 wt% to about 5 wt% of a (meth)acrylated polysiloxane having a number average molecular weight between about 10,000 and about 20,000 g/mol eq PS;
d) from about 2 wt% to about 12 wt%, preferably from about 5 wt% to about 10 wt% of one or more free-radical photoinitiators; wherein the wt%'s are based on the total weight of the radiation-curable protective varnish.

In a second aspect, the invention provides a radiation-curable protective varnish comprising:

a1) from about 25 wt% to about 65 wt%, preferably from about 35 wt% to about 50 wt% of one or more tri(meth)acrylate monomers, other than polysiloxanes, having a number average molecular weight less than about 700 g/mol eq PS;
a2) from about 5 wt% to about 25 wt%, preferably from about 8 wt% to about 20 wt%, of one or more di(meth)acrylate monomers, other than polysiloxanes, having a number average molecular weight of less than about 700 g/mol eq PS;
a3) from about 15 wt% to about 40 wt%, preferably from about 20 wt% to about 30 wt% of one or more oligomers, other than polysiloxanes, bearing two or more (meth)acrylate moieties, and having a number average molecular weight of greater than or equal to about 700 g/mol eq PS;
b) from about 0.5 wt% to about 5 wt% of a (meth)acrylated polysiloxane having a number average molecular weight between about 1,000 and about 8,000 g/mol eq PS;
c) from about 0.5 wt% to about 5 wt% of a (meth)acrylated polysiloxane having a number average molecular weight between about 10,000 and about 20,000 g/mol eq PS;
d) from about 2 wt% to about 12 wt%, preferably from about 5 wt% to about 10 wt% of one or more free-radical photoinitiators;

wherein the wt%'s are based on the total weight of the radiation-curable protective varnish.

In a third aspect, the invention provides a process for coating a security document comprising a substrate and optionally one or more security features applied on or inserted into a portion of the substrate, wherein said process

comprises the following steps:

**i)** applying, preferably by a printing method selected from flexography printing, inkjet printing, and screen-printing, the radiation-curable protective varnish of the invention on a surface of the substrate and/or a surface of the one or more security features of the security document to form an un-cured varnish layer; and
**ii)** curing the un-cured varnish layer by exposure to UV light to form a protective coating covering the surface of the substrate and/or the surface of the one or more security features of the security document.

In a fourth aspect, the invention provides a document, preferably a security document, having a protective coating on at least a portion of a surface thereof, the protective coating resulting from radiation-curing of a radiation-curable protective varnish of the invention.

## DETAILED DESCRIPTION

### Definitions

The following definitions are to be used to interpret the meaning of the terms discussed in the description and recited in the claims.
As used herein, the article "a/an" indicates one as well as more than one and does not necessarily limit its referent noun to the singular.
As used herein, the term "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, i.e. the range from 95 to 105. Preferably, the range denoted by the term "about" denotes a range within ± 3% of the value, more preferably ± 1 %. Generally, when the term "about" is used, it can be expected that similar results or effects according to the invention can be obtained within a range of ±5% of the indicated value.
As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".
The term "comprising" as used herein is intended to be non-exclusive and open-ended. Thus, for instance a solution comprising a compound A may include other compounds besides A. However, the term "comprising" also covers, as a particular embodiment thereof, the more restrictive meanings of "consisting essentially of" and "consisting of", so that for instance "a solution comprising A, B, and optionally C" may also (essentially) consist of A, and B, or (essentially) consist of A, B, and C.
Where the present description refers to "preferred" embodiments/features, combinations of these "preferred" embodiments/features are also deemed to be disclosed as long as the specific combination of "preferred" embodiments/features is technically meaningful.
As used herein, the term "one or more" means one, two, three, four, etc.
As used herein, the term "security document" refers to a document having a value such as to render it potentially liable to attempts at counterfeiting or illegal reproduction and which is usually protected against counterfeit or fraud by at least one security feature. Typical examples of security documents include without limitation banknotes, deeds, tickets, checks, vouchers, fiscal stamps and tax labels, agreements and the like, identity documents such as passports, identity cards, visas, bank cards, credit cards, transaction cards, access documents, entrance tickets and the like.
As used herein "molecular weight" refers to the number average molecular weight ($M_n$).
As used herein the expression "(meth)acrylate" is meant to encompass both acrylate and methacrylate moieties.
As used herein, the expression "eq PS" means "equivalent to polystyrene" and is used to indicate that the quoted molecular weight is measured using GPC against polystyrene standards.

### Abbreviations

The following abbreviations are used in the present description, and have the following meanings:

| | |
|---|---|
| PFAS | per- and polyfluoroalkyl substances |
| HSE | health, safety and environmental |
| GPC | gel permeation chromatography |
| PS | polystyrene |

The inventors have found that when a radiation-curable protective varnish comprises two different (meth)acrylate-bearing polysiloxanes having different molecular weights, good anti-soiling and durability characteristics result.

The radiation-curable protective varnish of the invention comprises from about 25 wt% to about 95 wt%, preferably from about 30 wt% to about 85 wt%, more preferably from about 35 wt% to about 75 wt% of a mixture of (meth)acrylates, other than polysiloxanes, selected from those having a (meth)acrylate functionality of two or more, preferably a mixture of di(meth)acrylates and tri(meth)acrylates. The (meth)acrylates are not particularly limited. In a preferred embodiment, they are selected from ethylene glycol diacrylate (CAS no. 2274-11-5); 1,4-butanediol diacrylate (CAS no. 1070-70-8); *1,3*-butanediol *diacrylate* (CAS no. 19485-03-1); 2-methyl-1,3-propanediol diacrylate (CAS no. 86168-86-7), 3-methyl-1,5-pentanediol diacrylate (CAS no. 64194-22-5); 2-butyl-2-ethyl-1,3-propanediol *diacrylate* (CAS no. 67019-04-9), 1,6-hexanediol diacrylate (CAS no. 13048-33-4); neopentyl glycol diacrylate (CAS no. 2223-82-7); *1,9-nonanediol diacrylate (*CAS no. 107481-28-7); ethoxylated 1,6-hexanediol diacrylates (CAS no. 84170-27-4); propoxylated 1,6-hexanediol diacrylates (CAS no. 84170-73-0); propoxylated neopentyl glycol diacrylate (CAS no. 84170-74-1); ethoxylated 2-methyl-1,3-propanediol diacrylate (CAS no. 634592-28-2); tricyclodecanedimethanol diacrylate (CAS no. 42594-17-2); diethylene glycol diacrylate (CAS no. 4074-88-8); dipropylene glycol diacrylate (CAS no. 57472-68-1); triethyleneglycol diacrylate (CAS no. 1680-21-3); tripropyleneglycol diacrylate (CAS no. 42978-66-5); tetraethyleneglycol diacrylate (CAS no. 17831-71-9); polyethylene glycol 200/400 diacrylates (CAS no. 26570-48-9); and ethoxylated (EO2/EO3/EO4/EO10) bisphenol A diacrylates (CAS no. 64401-02-1), ethylene glycol di(meth)acrylate (CAS no. 97-90-5); 1,4-butanediol di(meth)acrylate (CAS no. 2082-81-7); *1,3*-butanediol *di(meth)acrylate* (CAS no. 1189-08-8); 1,6-hexanediol di(meth)acrylate (CAS no. 6606-59-3); neopentyl glycol di(meth)acrylate (CAS no. 1985-51-9); *1,9-nonanediol diacrylate (*CAS no. 107481-28-7); diethylene glycol di(meth)acrylate (CAS no. 2358-84-1); triethyleneglycol di(meth)acrylate (CAS no. 109-16-0); tetraethyleneglycol di(meth)acrylate (CAS no. 109-17-1); polyethyleneglycol 200/400 di(meth)acrylate (CAS no. 25852-47-5); and ethoxylated (EO2/EO3/EO4/EO10) bisphenol A di(meth)acrylates (CAS no. 41637-38-1), trimethylolpropane triacrylates, trimethylolpropane tri(meth)acrylates, alkoxylated trimethylolpropane triacrylates, alkoxylated trimethylolpropane tri(meth)acrylates, alkoxylated glycerol triacrylates, pentaerythritol triacrylates, alkoxylated pentaerythritol triacrylates and mixtures thereof, preferably selected from the group consisting of trimethylolpropane triacrylates, alkoxylated trimethylolpropane triacrylates, alkoxylated glycerol triacrylates, pentraerythritol triacrylates, ditrimethylolpropane tetraacrylates, pentraerythritol tetraacrylates, alkoxylated pentaerythritol tetraacrylates, and mixtures thereof. In one embodiment, the mixture of (meth)acrylates additionally comprises urethane (meth)acrylate oligomers, polyester (meth)acrylate oligomers, polyether based (meth)acrylate oligomers, amine modified polyether based (meth)acrylate oligomers or epoxy (meth)acrylate oligomers, more preferably urethane (meth)acrylate oligomers and epoxy (meth)acrylate oligomers, and mixtures thereof.

In one embodiment, the mixture of (meth)acrylates comprises at least one acrylated oligoamine, preferably having an acrylate functionality of about 2. Preferably, the acrylated oligoamine resin has a number average molecular weight of about 1,804 g/mol eq PS.

In one embodiment, the radiation-curable protective varnish of the invention comprises a mixture of (meth) acrylates comprising:

a1) from about 25 wt% to about 65 wt%, preferably from about 35 wt% to about 50 wt% of one or more tri(meth)acrylate monomers, other than polysiloxanes, having a molecular weight less than about 700 g/mol eq PS;
a2) from about 5 wt% to about 25 wt%, preferably from about 8 wt% to about 20 wt%, of one or more di(meth)acrylate monomers, other than polysiloxanes, having a molecular weight of less than about 700 g/mol eq PS;
a3) from about 15 wt% to about 40 wt%, preferably from about 20 wt% to about 30 wt% of one or more oligomers, other than polysiloxanes, bearing two or more (meth)acrylate moieties, and having a number average molecular weight of greater than or equal to about 700 g/mol eq PS;

based on the total weight of the radiation-curable protective varnish.

In one embodiment, the radiation-curable protective varnish of the invention comprises a1) from about 25 wt% to about 65 wt%, preferably from about 35 wt% to about 50 wt% of one or more tri(meth)acrylate monomers, other than polysiloxanes, having a molecular weight less than about 700 g/mol eq PS. The one or more tri(meth)acrylate monomer is preferably selected from the group consisting of trimethylolpropane tri(meth)acrylates, alkoxylated trimethylolpropane tri(meth)crylates, alkoxylated trimethylolpropane tri(meth)acrylates, alkoxylated glycerol tri(meth)acrylates, pentaerythritol tri(meth)acrylates, alkoxylated pentaerythritol tri(meth)acrylates and mixtures thereof, preferably selected from the group consisting of trimethylolpropane triacrylates, alkoxylated trimethylolpropane triacrylates, alkoxylated glycerol triacrylates, pentraerythritol triacrylates and mixtures thereof, preferably selected from the group consisting of trimethylolpropane triacrylates, alkoxylated trimethylolpropane triacrylates, alkoxylated glycerol triacrylates, pentraerythritol triacrylates,

In one embodiment, the one or more tri(meth)acrylate monomers having a molecular weight less than about 700 g/mol eq PS is a triacrylate monomer, preferably selected from propoxylated glycerol triacrylates, more preferably propoxylated glycerol triacrylates having a molecular weight of from about 400 g/mol to about 500 g/mol, more preferably

about 455.50 g/mol.

In one embodiment, the radiation-curable protective varnish of the invention comprises a2) from about 5 wt% to about 25 wt%, preferably from about 8 wt% to about 20 wt%, of one or more di(meth)acrylate monomers, other than polysiloxanes, having a molecular weight of less than about 700 g/mol eq PS. The one or more di(meth)acrylate monomers having a molecular weight of less than about 700 g/mol eq PS is preferably selected from ethylene glycol diacrylate (CAS no. 2274-11-5); 1,4-butanediol diacrylate (CAS no. 1070-70-8); *1,3*-butanediol *diacrylate* (CAS no. 19485-03-1); 2-methyl-1,3-propanediol diacrylate (CAS no. 86168-86-7), 3-methyl-1,5-pentanediol diacrylate (CAS no. 64194-22-5); 2-butyl-2-ethyl-1,3-propanediol *diacrylate* (CAS no. 67019-04-9), 1,6-hexanediol diacrylate (CAS no. 13048-33-4); neopentyl glycol diacrylate (CAS no. 2223-82-7); *1,9-nonanediol diacrylate (*CAS no. 107481-28-7); ethoxylated 1,6-hexanediol diacrylates (CAS no. 84170-27-4); propoxylated 1,6-hexanediol diacrylates (CAS no. 84170-73-0); propoxylated neopentyl glycol diacrylate (CAS no. 84170-74-1); ethoxylated 2-methyl-1,3-propanediol diacrylate (CAS no. 634592-28-2); tricyclodecanedimethanol diacrylate (CAS no. 42594-17-2); diethylene glycol diacrylate (CAS no. 4074-88-8); dipropylene glycol diacrylate (CAS no. 57472-68-1); triethylene glycol diacrylate (CAS no. 1680-21-3); tripropylene glycol diacrylate (CAS no. 42978-66-5); hydroxypivalic acid neopentyl glycol diacrylate (CAS no. 1115-20-4), tetraethylene glycol diacrylate (CAS no. 17831-71-9); polyethylene glycol 200/400 diacrylates (CAS no. 26570-48-9); and ethoxylated (EO2/EO3/EO4/EO10) bisphenol A diacrylates (CAS no. 64401-02-1), ethylene glycol di(meth)acrylate (CAS no. 97-90-5); 1,4-butanediol di(meth)acrylate (CAS no. 2082-81-7); *1,3*-butanediol *di(meth)acrylate* (CAS no. 1189-08-8); 1,6-hexanediol di(meth)acrylate (CAS no. 6606-59-3); neopentyl glycol di(meth)acrylate (CAS no. 1985-51-9); *1,9-nonanediol diacrylate (*CAS no. 107481-28-7); diethylene glycol di(meth)acrylate (CAS no. 2358-84-1); triethylene glycol di(meth)acrylate (CAS no. 109-16-0); tetraethylene glycol di(meth)acrylate (CAS no. 109-17-1); polyethylene glycol 200/400 di(meth)acrylate (CAS no. 25852-47-5); and ethoxylated (EO2/EO3/EO4/EO10) bisphenol A di(meth)acrylates (CAS no. 41637-38-1), and mixtures thereof.

In one embodiment, the one or more di(meth)acrylates having a molecular weight of less than about 700 g/mol eq PS is selected from compounds of Formula I:

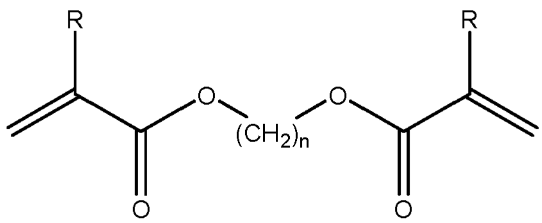

**(I)**

wherein R is H or $CH_3$, and n is an integer from 3 to 14, more preferably from 4 to 8, particularly preferably 6. Preferably R is H.

In one embodiment, R is H and n is 4 to 8, preferably n is 6.

In one embodiment, the radiation-curable protective varnish comprises a3) from about 15 wt% to about 40 wt%, preferably from about 20 wt% to about 30 wt% of one or more oligomers, other than polysiloxanes, bearing two or more (meth)acrylate moieties, and having a number average molecular weight of greater than or equal to about 700 g/mol eq PS, preferably greater than about 7,000 g/mol eq PS, more preferably greater than about 1,000 g/mol eq PS.

In one embodiment, the one or more oligomers is a bis-phenol A epoxy acrylate having a number average molecular weight of 833 g/mol eq PS.

The one or more oligomers may be branched or linear, and may have terminal and/or pendant (meth)acrylate functional group(s). Preferably, the one or more oligomers is selected from the group consisting of (meth)acrylate oligomers, urethane (meth)acrylate oligomers, polyester (meth)acrylate oligomers, polyether based (meth)acrylate oligomers, epoxy (meth)acrylate oligomers, (meth)acrylated oligoamine oligomers, and mixtures thereof, more preferably selected from the group consisting of epoxy (meth)acrylate oligomers and (meth)acrylated oligoamine oligomers, and mixtures thereof.

Suitable examples of epoxy (meth)acrylate oligomer include without limitation aliphatic epoxy (meth)acrylate oligomers, in particular mono(meth)acrylates, di(meth)acrylates and tri(meth)acrylates, and aromatic epoxy (meth) acrylate oligomers. Suitable examples of aromatic epoxy (meth)acrylate oligomers include bisphenol-A (meth)acrylate oligomers, such as bisphenol-A mono(meth)acrylates, bisphenol-A di(meth)acrylates and bisphenol-A tri(meth)acrylates as well as alkoxylated (such as for example ethoxylated and propoxylated) bisphenol-A (meth)acrylate oligomers such as for example alkoxylated bisphenol-A mono(meth)acrylates, alkoxylated bisphenol-A di(meth)acrylates and alkoxylated bisphenol-A tri(meth)acrylates, preferably alkoxylated bisphenol-A di(meth)acrylates

In one embodiment, the one or more oligomers bearing two or more (meth)acrylate moieties, and having a

number average molecular weight of greater than or equal to about 700 g/mol eq PS comprises a (meth)acrylated epoxy resin, preferably an acrylated epoxy resin.

In one embodiment, a portion of the one or more oligomers bearing two or more (meth)acrylate moieties, and having a number average molecular weight of greater than or equal to about 700 g/mol eq PS is a (meth)acrylated oligoamine resin, preferably having an acrylate functionality of 2 or more.

In one embodiment, the one or more oligomers, bearing two or more (meth)acrylate moieties, and having a number average molecular weight of greater than or equal to about 700 g/mol eq PS is a mixture of:

a (meth)acrylated epoxy resin, preferably an acrylated epoxy resin, and
a (meth)acrylated oligoamine resin, preferably an acrylated oligoamine resin.

In one embodiment, the one or more oligomers bearing two or more (meth)acrylate moieties, and having a number average molecular weight of greater than or equal to about 700 g/mol eq PS is a mixture of:

a (meth)acrylated epoxy resin, preferably an acrylated epoxy resin, and
a (meth)acrylated oligoamine resin, preferably an acrylated oligoamine resin,
and the radiation-curable protective varnish of the invention comprises from about 8 wt% to about 25 wt%, preferably from about 11 wt% to about 15 wt% of the (meth)acrylated epoxy resin, preferably an acrylated epoxy resin, and from about 8 wt% to about 25 wt%, preferably from about 11 wt% to about 15 wt% of the (meth)acrylated oligoamine resin, preferably an acrylated oligoamine resin.

The radiation-curable protective varnish of the invention comprises two different (meth)acrylate-bearing polysiloxanes having different number average molecular weights. The polysiloxanes are preferably selected from non-ionic surfactants comprising a silicone backbone containing randomly distributed recurring units selected from di(methyl) siloxane ($-(CH_3)_2SiO-$) and/or methyl-($C_2$-$C_{10}$-alkyl)-siloxane ($-(CH_3)(C_2$-$C_{10}$-alkyl$)SiO-$), wherein one or more methyl groups and/or $C_2$-$C_{10}$-alkyl groups may be independently of each other substituted by an aryl group, a polyester, and presenting one or more terminal (meth)acrylate groups, wherein the silicone backbone may be connected directly or *via* a spacer to the one or more terminal (meth)acrylate groups.

The radiation-curable protective varnish of the invention comprises from about 0.5 wt% to about 5 wt% of a (meth) acrylate group-bearing polysiloxane having a number average molecular weight between about 1,000 and about 8,000 g/mol eq PS, based on the total weight of the radiation-curable protective varnish.

Preferably the (meth)acrylate group-bearing polysiloxane having a number average molecular weight between about 1,000 and about 8,000 g/mol eq PS is selected from mono(meth)acrylates, di(meth)acrylates, tri(meth)acrylates and tetra(meth)acrylates.

In one embodiment, the (meth)acrylate group-bearing polysiloxane having a number average molecular weight between about 1,000 and about 8,000 g/mol eq PS has a molecular weight between about 2,000 and about 7,500 g/mol, preferably between about 3,000 and about 7,000 g/mol.

In another embodiment, the (meth)acrylate group-bearing polysiloxane having a number average molecular weight between about 1,000 and about 8,000 g/mol eq PS is selected from those having a (meth)acrylate functionality of about 1 to about 4, preferably about 2. Examples include mono(meth)acrylates, di(meth)acrylates, tri(meth)acrylates and tetra(meth)acrylates, having a molecular weight between about 2,000 and about 7,500 g/mol eq PS, preferably between about 3,000 and about 7,000 g/mol eq PS.

In one embodiment, the (meth)acrylate group-bearing polysiloxane having a number average molecular weight between about 1,000 and about 8,000 g/mol eq PS has a number average number average molecular weight of about 6,522 g/mol eq PS.

In one embodiment, the (meth)acrylate group-bearing polysiloxane having a number average molecular weight between about 1,000 and about 8,000 g/mol eq PS is a polyester-modified, acrylate-functionalized polydimethylsiloxane, having a number average molecular weight of about 6,522 g/mol eq PS and an acrylate functionality of about 2.

The (meth)acrylate group-bearing polysiloxane having a number average molecular weight between about 1,000 and about 8,000 g/mol eq PS is preferably present at about 2 to about 5 wt%, based on the total weight of the radiation-curable protective varnish.

The radiation-curable protective varnish of the invention comprises from about 0.5 wt% to about 5 wt% of a (meth) acrylate group-bearing polysiloxane having a number average molecular weight between about 10,000 and about 20,000 g/mol eq PS, based on the total weight of the radiation-curable protective varnish.

Preferably the (meth)acrylate group-bearing polysiloxane having a number average molecular weight between about 10,000 and about 20,000 g/mol eq PS is selected from those having (meth)acrylate functionalities from about 1 to about 4, preferably about 2. Examples include mono(meth)acrylates, di(meth)acrylates, tri(meth)acrylates and tetra(meth)acrylates.

In one embodiment, the (meth)acrylate group-bearing polysiloxane having a number average molecular weight between about 10,000 and about 20,000 g/mol eq PS has a molecular weight between about 11,000 and about 18,000 g/mol eq PS, preferably between about 12,000 and about 15,000 g/mol eq PS.

In another embodiment, the (meth)acrylate group-bearing polysiloxane having a number average molecular weight between about 10,000 and about 20,000 g/mol eq PS is selected from those having (meth)acrylate functionalities from about 1 to about 4, preferably about 2, preferably mono(meth)acrylates, di(meth)acrylates, tri(meth)acrylates and tetra(meth)acrylates having a molecular weight between about 11,000 and about 18,000 g/mol eq PS, preferably between about 12,000 and about 15,000 g/mol eq PS.

The (meth)acrylate group-bearing polysiloxane having a number average molecular weight between about 10,000 and about 20,000 g/mol eq PS is preferably present at about 0.5 wt% to about 2 wt%, based on the total weight of the radiation-curable protective varnish.

In one embodiment, the (meth)acrylate group-bearing polysiloxane having a number average molecular weight between 10,000 and 20,000 g/m is siloxanes and silicones, di-Me, 3-[2-hydroxy-3-[(1-oxo-2-propenyl)oxy]propoxy]propyl Me (CAS Nr: 136753-21-4), with number average molecular weight of 13,906 g/mol eq PS, and an acrylate functionality of about 1.96.

In one embodiment, the (meth)acrylate group-bearing polysiloxane having a number average molecular weight between about 1,000 and about 8,000 g/mol eq PS is a polyester-modified, acrylate-functionalized polydimethylsiloxane, having a number average molecular weight of about 6,522 g/mol eq PS, having an acrylate functionality of about 2, preferably at about 0.75 to about 3.5 wt%, and the (meth)acrylate group-bearing polysiloxane having a number average molecular weight between about 10,000 and about 20,000 g/m eq PS is siloxanes and silicones, di-Me, 3-[2-hydroxy-3-[(1-oxo-2-propenyl)oxy]propoxy]propyl Me (CAS Nr: 136753-21-4), with a number average molecular weight of 13,906 g/mol eq PS, and an acrylate functionality of about 1.96, preferably at 0.75 to 3.5 wt%, the wt%'s being based on the total weight of the radiation-curable protective varnish.

In one embodiment, the (meth)acrylate group-bearing polysiloxane having a number average molecular weight between about 1,000 and about 8,000 g/mol eq PS is present at a range between about 2 wt% and about 5 wt% and the (meth)acrylate group-bearing polysiloxane having a number average molecular weight between about 10,000 and about 20,000 g/m is present at a range between about 0.5 wt% and about 2 wt%.

The number average molecular weights ($M_n$) of the polysiloxanes can be determined by GPC (gel permeation chromatography) according to OECD test method 118. In a specific example, a Malvern Viskotek GPCmax was used. The device is equipped with an isocratic pump, a degasser, an autosampler and a triple detector TDA 302 comprising a differential refractometer, a viscosimeter and a double-angle light scattering detector (7° and 90°). A calibration curve [log(molecular mass) vs f(retention volume)] is established using six polystyrene standards (with molecular masses ranging from 472 to 512,000 g/mol) and *n*-hexylbenzene being used for as the standard for the smallest molecular mass (M = 162 g/mol). Two columns Viskotek TM4008L (column length 30.0 cm, internal diameter 8.0 mm) are coupled in series. The stationary phase is made of a styrene-divinylbenzene copolymer with a particle size of 6 μm and a maximum pore size of 3000 Å. During the measurement, the temperature is fixed at 35°C. The analyzed samples contain 10 mg/mL of polysiloxane dissolved in THF, and are injected at a rate of 1 mL/min. The molecular mass of the polysiloxane is calculated from the chromatogram as a polystyrene-equivalent number average molecular weight (PS eq $M_n$) using the following formula:

$$M_n = \frac{\sum_{i=1}^{n} H_i M_i}{\sum_{i=1}^{n} H_i}$$

where $H_i$ is the level of the detector signal (differential refractometer) from the baseline for the retention volume $V_i$, $M_i$ is the molecular mass of the polymer fraction at the retention volume $V_i$ and $n$ is number of data points. Omnisec 5.12 as provided with the device can be used as a software.

The radiation-curable protective varnish of the invention comprises from about 2 wt% to about 12 wt%, preferably from about 5 wt% to about 10 wt% of one or more free-radical photoinitiators. The one or more free-radical photoinitiators are preferably selected from the group consisting of hydroxyketones (e.g. alpha-hydroxyketones), alkoxyketones (e.g. alpha-alkoxyketones), acetophenones, benzophenones, ketosulfones, benzyl ketals, benzoin ethers, phosphine oxides, phenylglyoxylates, thioxanthones and mixtures thereof, more preferably selected form the group consisting of alpha-hydroxyketones and phosphine oxides.

Suitable alpha-hydroxyketones include without limitation 2-hydroxy-2-methylpropiophenone, (1-[4-(2-hydroxyethoxy)-phenyl]-2-hydroxy-2-methyl-1-propan-1-one), 1-hydroxycyclohexyl phenyl ketone, 2-hydroxy-2-methyl-1-phenylpropan-1-one, 2-hydroxy-2-methyl-1-(4-*tert*-butyl)phenylpropan-1-one, 2-hydroxy-1-[4-[[4-(2-hydroxy-2-methylpropanoyl)phenyl]methyl]phenyl]-2-methylpropan-1-one, 2-hydroxy-1-[4-[4-(2-hydroxy-2-methylpropanoyl)phenoxy]phenyl]-2-methylpropan-1-one, 2-hydroxy-1-[1-[4-(2-hydroxy-2-methylpropanoyl)phenyl]-1,3,3-trimethylindan-5-yl]-2-methylpropan-1-one, poly(oxy-1,2-ethanediyl), α-(1,1-dimethyl-2-oxo-2-phenylethyl)-ω-hydroxy-, oligo[2-hydroxy-2-methyl-1-[4-(1-methylvinyl)phenyl]propanone], 2-hydroxy-4'-hydroxyethoxy-2-methylpropiophenone (CAS Nr: 106797-53-9), and oligo[2-hydroxy-2-methyl-1-[4-(1-methylvinyl)phenyl]propanone].

Suitable acetophenones include without limitation 2,2-diethoxyacetophenone, and 2-methoxy-2-phenylacetophenone.

Suitable benzophenones include without limitation benzophenone, polymeric benzophenone derivatives, 2-methylbenzophenone, 3-methylbenzophenone, 4-methylbenzophenone, 2,4,6-trimethylbenzophenone, 3,3'-dimethyl-4-methoxybenzophenone, 4-phenylbenzophenone, 4-chlorobenzophenone, methyl-2-benzoylbenzoate, 4-(4-methylphenylthio)benzophenone, 4-hydroxybenzophenone laurate, and a mixture of 50% benzophenone and 50% 1-hydroxycyclohexyl phenyl ketone.

Suitable ketosulfones include without limitation 1-[4-(4-benzoylphenylsulfanyl)phenyl]-2-methyl-2-(4-methylphenylsulfonyl)propan-1-one.

Suitable benzyl ketals include without limitation 2,2-dimethoxy-2-phenylacetophenone.

Suitable benzoin ethers include without limitation 2-ethoxy-1,2-diphenylethanone, 2-isopropoxy-1,2-diphenylethanone, 2-isobutoxy-1,2-diphenylethanone, 2-butoxy-1,2-diphenylethanone, 2,2-dimethoxy-1,2-diphenylethanone, and 2,2-diethoxyacetophenone.

Suitable phosphine oxides include without limitation ethyl phenyl(2,4,6-trimethylbenzoyl)phosphinate, 2,4,6-trimethylbenzoyldiphenylphosphine oxide, ethyl (2,4,6-trimethylbenzoyl)phenylphosphinate, phenylbis(2,4,6-trimethylbenzoyl)phosphine oxide, bis(2,6-dimethoxybenzoyl)-2,4,4-trimethylpentylphosphine oxide, substituted acylphosphine oxides, a mixture of diphenyl(2,4,6-trimethylbenzoyl)phosphine oxide and 2-hydroxy-2-methylpropiophenone, a mixture of phenylbis(2,4,6-trimethylbenzoyl)phosphine oxide and 2-hydroxy-2-methylpropiophenone, a mixture of ethyl(2,4,6-trimethylbenzoyl)phenylphosphinate and 2-hydroxy-2-methylpropiophenone, and a mixture of phenylbis(2,4,6-trimethylbenzoyl)phosphine oxide and ethyl (2,4,6-trimethylbenzoyl)phenylphosphinate.

Suitable thioxanthones include without limitation 2-methyl thioxanthone, 2,4-diethylthioxanthone, 2-isopropylthioxanthone, 1-chloro-4-propoxythioxanthone, 2,4-diethyl-9H-thioxanthen-9-one, and polymeric thioxanthone derivatives.

Suitable phenylglyoxylates include without limitation methyl benzoylformate, 2-[2-oxo-2-phenyl-acetoxy-ethoxy]ethyl 2-oxo-2-phenylacetate, and a mixture of 2-[2-oxo-2-phenyl-acetoxy-ethoxy]ethyl 2-oxo-2-phenylacetate and oxy-phenyl-acetic acid 2-[2-hydroxy-ethoxy]-ethyl ester.

The radiation-curable protective varnish of the invention may contain a mixture of the above-identified free-radical photoinitiators. Such mixtures include for example a mixture of 2,4,6-trimethylbenzoyldiphenylphosphine oxide (CAS Nr 75980-60-8) and 2-hydroxy-2-methyl-1-phenylpropan-1-one (CAS Nr 7473-98-5), sold e.g. by IGM Resins under the tradename Omnirad 4265; a mixture of phenylbis(2,4,6-trimethylbenzoyl)phosphine oxide (CAS Nr 162881-26-7), ethyl(2,4,6-trimethylbenzoyl)phenylphosphinate (CAS Nr 84434-11-7) and 2-hydroxy-2-methylpropiophenone (CAS Nr 7473-98-5), sold e.g. by IGM Resins under the tradename Omnirad 2022; a mixture of ethyl(2,4,6-trimethylbenzoyl) phenylphosphinate (CAS Nr 84434-11-7) and phenylbis(2,4,6-trimethylbenzoyl)phosphine oxide (CAS Nr 162881-26-7), sold e.g. by IGM Resins under the tradename Omnirad 2100; a mixture of 2-hydroxy-2-methylpropiophenone (CAS Nr 7473-98-5) and 1-hydroxycyclohexyl phenyl ketone (CAS Nr 947-19-3), sold e.g. by IGM Resins under the tradename Omnirad 1000; a mixture of oligo[2-hydroxy-2-methyl-1-[4-(1-methylvinyl)phenyl]propanone] (CAS Nr 163702-01-0) and 2-hydroxy-2-methylpropiophenone (CAS Nr 7473-98-5), sold e.g. by IGM Resins under the tradename Esacure KIP100F; a mixture of 2-hydroxy-2-methylpropiophenone (CAS Nr 7473-98-5), ethyl(2,4,6-trimethylbenzoyl)phenylphosphinate (CAS Nr 84434-11-7) and oligo[2-hydroxy-2-methyl-1-[4-(1-methylvinyl)phenyl]propanone] (CAS Nr 163702-01-0), sold by IGM Resins under the tradename Omnirad BL 723; as well as a mixture of 2-hydroxy-2-methylpropiophenone (CAS Nr 7473-98-5), oligo[2-hydroxy-2-methyl-1-[4-(1-methylvinyl)phenyl]propanone] (CAS Nr 163702-01-0), ethyl(2,4,6-trimethylbenzoyl)phenylphosphinate (CAS Nr 84434-11-7) and 2,2-dimethoxy-1,2-diphenylethan-1-one (CAS Nr 24650-42-8), sold by IGM Resins under the tradename Omnirad BL 724, a mixture of 2-hydroxy-2-methylpropiophenone and ethyl phenyl(2,4,6-trimethylbenzoyl)phosphinate, in particular a 1:2 (w:w) mixture of 2-hydroxy-2-methylpropiophenone and ethyl phenyl(2,4,6-trimethylbenzoyl)phosphinate.

Phosphine oxide and thioxanthone photoinitiators are particularly preferred when curing is performed by UV-LED, since both absorb at the common UV-A wavelengths (such as 365, 385 or 295 nm) of commercial UV-LED lamps. When thioxanthone photoinitiators are the sole photoinitiators or represent the largest amount (in weight% of the total weight of the blend of photoinitiators), it is the common practice to add to said blend of photoinitiators one or more amine synergists. Amine synergists act as hydrogen donors and strongly enhance the curing rate.

The one or more amine synergists are preferably selected from the group consisting of aliphatic and aromatic tertiary amines. Aliphatic amines include without limitation N-methyldiethanolamine, triethanolamine and tri-isopropanolamine. Aromatic tertiary amines include without limitation ethyl 4-(dimethylamino)benzoate; benzoic acid, 4-(dimethylamino)-, 2-ethylhexyl ester; benzoic acid, 4-(dimethylamino)-, 3-methylbutyl ester; benzoic acid, 2-(dimethylamino)ethyl ester. However, such small molecules, that may be prone to migration and raise increasing EHS concerns, are

progressively replaced by amine synergists under an oligomeric form and having a higher molecular weight. Suitable amine synergists include without limitation benzoic acid, 4-(dimethylamino)-, 1,1'-[(methylimino)di-2,1-ethanediyl] ester; poly(oxy-1,2-ethanediyl), α-[4-(dimethylamino)benzoyl]-ω-[[4-(dimethylamino)benzoyl]oxy]-; a mixture of oxirane, 2-methyl-, polymer with oxirane, 4-(dimethylamino)benzoate and poly[oxy(methyl-1,2-ethanediyl)], α-hydro-ω-[[4-(dimethylamino)benzoyl]oxy]-, ether with 2,2-bis(hydroxymethyl)-1,3-propanediol (4:1); polymeric 4-dimethylaminobenzoic ester coinitiator sold under the trademark Genopol® AB-2 by Rahn. Preferably, the weight ratio of the one or more amine synergists and the one or more thioxanthone photoinitiators is between about 1:3 and about 1:1.

Particularly preferred is a blend comprising about 60 wt% of one or more phosphine oxides (such as ethyl phenyl(2,4,6-trimethylbenzoyl)phosphinate), about 30 wt% of one or more alpha-hydroxyketones (such as 2-hydroxy-2-methylpropiophenone) and about 10 wt% of one or more thioxanthones (such as 2,4-diethyl-9H-thioxanthen-9-one), the weight percents being based on the total weight of the blend of photoinitiators, because its curing performance is equally good under UV-LED and mercury sources. Also particularly preferred for the same reason is a blend comprising about 50 wt% of one or more thioxanthones (such as 2-isopropylthioxanthone), 25 wt% of one or more phosphine oxides (such as ethyl phenyl(2,4,6-trimethylbenzoyl)phosphinate) and about 25 wt% of one or more amine synergists (such as benzoic acid, 4-(dimethylamino)-, 1,1'-[(methylimino)di-2,1-ethanediyl] ester).

To facilitate storing, stacking and grasping of security documents, in particular banknotes, the radiation-curable protective varnish of the invention may contain a matting agent, which provides a matt protective coating with a better grip. Moreover, a matt protective coating has the advantage of retaining the users' accustomed perception of security documents by the sense of touch, and causes much less reflection than a glossy protective coating, thereby, enabling machine checking and authentication of security documents with the optical sensors customarily used. The matting agent is preferably present in an amount from about 1 wt% to about 12 wt%, more preferably about 2 to about 5 wt%, the wt% being based on the total weight of the radiation-curable protective varnish.

The use of matting agents should be avoided if the radiation-curable protective varnish is intended for production of glossy protective coatings that can be useful, for example, for protecting the surface of an overt security feature present in a security document. A radiation-curable protective varnish of the invention, which is free of matting agents, provides a glossy protective coating, which is conspicuous and draws the layperson's attention to the security feature covered by the glossy lacquer, thereby aiding the inexperienced user to easily find the security feature on the security document. Such radiation-curable protective varnish can be applied directly on the surface of a security feature present on a security document. Furthermore, such matting agent-free radiation-curable protective varnish may be useful for producing glossy discontinuous protective coatings for security documents as described in the international patent application publication number WO2011120917A1, which present a matt protective coating applied directly on the surface of the security document and a glossy protective coating, which partially covers the surface of the matt protective coating.

The matting agent is preferably selected from inorganic particles and resin particles. Examples of inorganic particles and resin particles include, but are not limited to thermoplastic polymer matting agents, such as thermoplastic polymer microspheres and micronized polyolefin waxes, calcium carbonate matting agents, such as core/shell microparticles comprising a calcium carbonate core and a hydroxyapatite shell, sold under the tradename Omyamatt® 100 by Omya, aluminium oxide matting agents, aluminosilicate matting agents, and amorphous silicon dioxide particles having a porous structure, such as fumed amorphous silicon dioxide particles, precipitated amorphous silicon dioxide particles and amorphous silicon dioxide particles obtained from the sol-gel process.

Preferably, the matting agent is selected from amorphous silicon dioxide particles having a porous structure including organic surface treated amorphous silicon dioxide particles. Such matting agent presents low refractive index resulting in good transmission properties.

The matting agent is preferably characterized by a $D_{50}$ value in the range of from about 1μm to about 25 μm, preferably from about 2 μm to about 15 μm, more preferably between about 3μm and about 10 μm, as determined by laser diffraction.

The radiation-curable protective varnish may optionally contain up to about 10 wt% of an organic solvent, the wt% being based on the total weight of the radiation-curable protective varnish. Preferably, the organic solvent is present in an amount from about 1 wt% to about 7.5 wt%, more preferably from about 2 wt% to about 5 wt%, based on the total weight of the radiation-curable protective varnish. Preferably, the organic solvent is a polar organic solvent selected from alcohols, glycols, glycol ethers, glycol esters and cyclic carbonates, preferably having a boiling point higher than about 80°C, more preferably higher than about 100°C. In one embodiment, the solvent is n-butanol.

The radiation-curable protective varnish of the invention may further contain one or more additives including without limitation antifoaming agents, defoaming agents, UV-absorbers, anti-sedimentation stabilizers, antimicrobial agents including antibacterial agents, antiviral agents, and antifungal agents, and combinations thereof.

The radiation-curable protective varnish described and claimed herein may be prepared by mixing the one or more tri(meth)acrylate monomers, the one or more di(meth)acrylate monomers and the one or more oligomers, the organic solvent when present, the one or more additives when present, the matting agent when present, the surfactants, and the free-radical photoinitiator. Preferably, the solid ingredients of the radiation-curable protective varnish are

dispersed in the mixture of the liquid ingredients contained by said protective varnish. The surfactants and the free-radical photoinitiator may be added to the mixture either during the dispersing or mixing step of all other ingredients, or at a later stage (i.e. just before the application of the radiation-curable protective varnish on a surface of a substrate of a security document and/or on a surface of one or more security features of a security document) simultaneously, or in sequence.

Preferably the radiation-curable protective varnish is a flexography printing varnish, an inkjet printing varnish, or a screen-printing varnish, more preferably a flexography printing varnish.

In one embodiment, the radiation-curable protective varnish is a flexography printing varnish. Flexography printing preferably uses a unit with a doctor blade, preferably a chambered doctor blade, an anilox roller and plate cylinder. The anilox roller advantageously has small cells whose volume and/or density determines the curable varnish application rate. The doctor blade lies against the anilox roller, and scraps off varnish surplus at the same time. The anilox roller transfers the varnish to the plate cylinder, which finally transfers the varnish to the substrate. Specific design might be achieved using a designed photopolymer plate. Plate cylinders can be made from polymeric or elastomeric materials. Polymers are mainly used as photopolymer in plates and sometimes as a seamless coating on a sleeve. Photopolymer plates are made from light-sensitive polymers that are hardened by ultraviolet (UV) light. Photopolymer plates are cut to the required size and placed in an UV light exposure unit. One side of the plate is completely exposed to UV light to harden or cure the base of the plate. The plate is then turned over, a negative of the job is mounted over the uncured side and the plate is further exposed to UV light. This hardens the plate in the image areas. The plate is then processed to remove the unhardened photopolymer from the nonimage areas, which lowers the plate surface in these nonimage areas. After processing, the plate is dried and given a post-exposure dose of UV light to cure the whole plate. Preparation of plate cylinders for flexography is described in Printing Technology, J. M. Adams and P.A. Dolin, Delmar Thomson Learning, 5th Edition, pages 359-360. To be suitable to be printed by flexography, the radiation-curable protective varnish must have a viscosity in the range of about 50 to about 500 mPas at 25°C measured using a Brookfield viscometer (model "DV-I Prime) equipped with a spindle S21 at 100 rpm for measuring viscosities comprised between 100 mPa s and 500 mPas at 25°C, or using a rotational viscosimeter DHR-2 from TA Instruments (cone-plane geometry, diameter 40 mm) for viscosities below 100 mPa s at 25°C and 1000 $s^{-1}$.

In one embodiment according to the present invention, the radiation-curable protective varnish is an inkjet printing varnish, preferably a drop-on-demand (DOD) inkjet printing varnish. Drop-on-demand (DOD) printing is a non-contact printing process, wherein the droplets are only produced when required for printing, and generally by an ejection mechanism rather than by destabilizing a jet. Depending on the mechanism used in the printhead to produce droplets, the DOD printing is divided in piezo impulse, thermal jet and valve jet. To be suitable for DOD inkjet printing, the radiation-curable protective varnish must have low viscosity of less than about 20 mPa s at jetting temperature and a surface tension lower than about 45 N/m.

In a still another embodiment according to the present invention, the radiation-curable protective varnish is a screen-printing varnish. As well known to those skilled in the art, screen-printing (also referred in the art as silkscreen-printing) is a printing technique that typically uses a screen made of woven mesh to support an ink-blocking stencil. The attached stencil forms open areas of mesh that transfer varnish as a sharp-edged image onto a substrate. A squeegee is moved across the screen with ink-blocking stencil, forcing varnish past the threads of the woven mesh in the open areas. A significant characteristic of screen-printing is that a greater thickness of the varnish can be applied on the substrate than with other printing techniques. Screen-printing is therefore also preferred when varnish deposits with the thickness having a value between about 10 to about 50 μm or greater are required which cannot (easily) be achieved with other printing techniques. Generally, a screen is made of a piece of porous, finely woven fabric called mesh stretched over a frame of e.g. aluminum or wood. Currently most meshes are made of man-made materials such as synthetic or steel threads. Preferred synthetic materials are nylon or polyester threads.

In addition to screens made of a woven mesh based on synthetic or metal threads, screens have been developed out of a solid metal sheet with a grid of holes. Such screens are prepared by a process comprising of electrolytically forming a metal screen by forming in a first electrolytic bath a screen skeleton upon a matrix provided with a separating agent, stripping the formed screen skeleton from the matrix and subjecting the screen skeleton to an electrolysis in a second electrolytic bath in order to deposit metal onto said skeleton.

There are three types of screen-printing presses, namely flat-bed, cylinder and rotary screen-printing presses. Flat-bed and cylinder screen-printing presses are similar in that both use a flat screen and a three-step reciprocating process to perform the printing operation. The screen is first moved into position over the substrate, the squeegee is then pressed against the mesh and drawn over the image area, and then the screen is lifted away from the substrate to complete the process. With a flat-bed press the substrate to be printed is typically positioned on a horizontal print bed that is parallel to the screen. With a cylinder press the substrate is mounted on a cylinder. Flat-bed and cylinder screen-printing processes are discontinuous processes, and consequently limited in speed which is generally at maximum 45 m/min in web or 3'000 sheets/hour in a sheet-fed process.

Conversely, rotary screen presses are designed for continuous, high-speed printing. The screens used on rotary screen presses are for instance thin metal cylinders that are usually obtained using the electroforming method described

hereabove or made of woven steel threads. The open-ended cylinders are capped at both ends and fitted into blocks at the side of the press. During printing, the varnish is pumped into one end of the cylinder so that a fresh supply is constantly maintained. The squeegee is fixed inside the rotating screen and squeegee pressure is maintained and adjusted to allow a good and constant print quality. The advantage of rotary screen presses is the speed which can reach easily 150 m/min in web or 10’000 sheets/hour in a sheet-fed process.

Screen-printing is further described for example in The Printing Ink Manual, R.H. Leach and R.J. Pierce, Springer Edition, 5th Edition, pages 58-62, in Printing Technology, J. M. Adams and P.A. Dolin, Delmar Thomson Learning, 5th Edition, pages 293-328 and in Handbook of Print Media, H. Kipphan, Springer, pages 409-422 and pages 498-499.

The radiation-curable protective varnish of the invention may be applied by a contactless fluid micro-dispensing process, preferably selected from the group consisting of spray coating, aerosol jet printing, electrohydrodynamic printing, slot die coating and inkjet printing, more preferably by an inkjet printing process.

Spray coating is a technique involving forcing the composition through a nozzle whereby a fine aerosol is formed. A carrier gas and electrostatic charging may be involved to aid in directing the aerosol at the surface that is to be printed. Spray printing allows to print spots and lines. Suitable compositions for spray printing typically have a viscosity between about 10 mPa.s and about 1 Pa.s (25°C, 1000 $s^{-1}$). Resolution of spray coating printing lies in the millimeter range. Spray printing is described for example in F. C. Krebs, Solar Energy Materials & Solar Cells (2009), 93, page 407.

Aerosol jet printing (AJP) is compatible with a wide material range and freeform deposition, allows high resolution (in the order of about 10 micrometers) coupled with a relatively large stand-off distance (e.g. 1-5 mm), in addition to the independence of orientation. The technology involves aerosol generation using either ultrasonic or pneumatic atomization to generate an aerosol from compositions typically having a viscosity between about 1 mPa.s and about 1 Pa.s (25°C, 1000 $s^{-1}$). Aerosol jet printing is described for example in N. J. Wilkinson et al., The International Journal of Advanced Manufacturing Technology (2019) 105:4599-4619.

Electrohydrodynamic inkjet printing is a high-resolution inkjet printing technology. Electrohydrodynamic inkjet printing technology makes use of externally applied electric fields to manipulate droplet size, ejection frequency and placement on the substrate to get higher resolution than convention inkjet printing, while keeping a high production speed. The resolution of electrohydrodynamic inkjet printing is about two orders of magnitude higher than conventional inkjet printing technology; thus, it can be used for the orienting of nano- and micro-scale patterns. Electrohydrodynamic inkjet printing may be used both in drop-on-demand (DOD) or in continuous mode. Compositions for electrohydrodynamic inkjet printing typically have a viscosity between about 1 mPa.s and about 1 Pa.s (25°C, 1000 $s^{-1}$). Electrohydrodynamic inkjet printing technology is described for example P.V. Raje and N.C. Murmu, International Journal of Emerging Technology and Advanced Engineering, (2014), 4(5), pages 174-183.

Slot die-coating is a 1-dimensional coating technique. Slot-die coating allows for the coating of stripes of material which is well suited for making a multilayer coating with stripes of different materials layered on top of each other. The alignment of the pattern is produced by the coating head being translated along the direction perpendicular to the direction of the web movement. A slot die-coating head comprises a mask that defines the slots of the coating head through which the slot-die coating ink is dispersed. An example of a slot-die coating head is illustrated in F. C. Krebs, Solar Energy Materials & Solar Cells (2009), 93, page 405-406. Suitable compositions for slot die-coating typically have a viscosity between about 1 mPa.s and about 20 mPa.s (25°C, 1000 $s^{-1}$).

The radiation-curable protective varnish of the invention is curable by exposure to UV light, preferably by exposure to one or more wavelengths of between about 365 nm and about 405 nm, more preferably by exposure to UV light at 365 nm and/or 385 nm and/or 395 nm, emitted by one or more UV-LED light sources. As well-known by the person skilled in the art, the radiation-curable protective varnish of the invention is also suitable for curing using medium-pressure mercury lamps.

Another aspect according to the present invention relates to a process for coating a security document comprising a substrate and one or more security features applied on or inserted into a portion of the substrate, wherein said process comprises the following steps:

> **i)** applying, preferably by a printing method selected from flexography printing, inkjet printing, and screen-printing, the radiation-curable protective varnish of the invention on a surface of the substrate and/or a surface of the one or more security features of the security document to form a varnish layer; and
> **ii)** curing the varnish layer by exposure to UV light to form a protective coating covering the surface of the substrate and/or the surface of the one or more security features of the security document.

As used herein, the term "substrate" includes any security document substrate into a portion of which a security feature can be inserted and/or to which a security feature can be applied. Security document substrates include without limitation, papers or other fibrous materials such as cellulose, paper-containing materials, plastics and polymers, composite materials and mixtures or combinations thereof. Typical paper, paper-like or other fibrous materials are made from a variety of fibers including without limitation abaca, cotton, linen, wood pulp, and blends thereof. As well known to

those skilled in the art, cotton and cotton/linen blends are preferred for banknotes, while wood pulp is commonly used in non-banknote security documents. Typical examples of plastics and polymers include polyolefins, such as polyethylene (PE) and polypropylene (PP), polyamides, polyesters such as polyethylene terephthalate) (PET), poly(1,4-butylene terephthalate) (PBT), polyethylene 2,6-naphthoate) (PEN) and polyvinylchlorides (PVC). Typical examples of composite materials include without limitation multilayer structures or laminates of paper and at least one plastic or polymer material, such as those described hereabove. The substrate of the security document may be printed with any desired signs, including any symbols, images and patterns, and/or may include one or more security features, including luminescent security features.

A further aspect according to the present invention is directed to a security document comprising a substrate, one or more security features applied on or inserted into a portion of the substrate and a protective coating covering a surface of the substrate and/or a surface of the one or more security features of the security document, wherein the protective coating is obtained by the coating process of the invention comprising the following steps:

**i)** applying, preferably by a printing method selected from flexography printing, inkjet printing, and screen-printing, more preferably by flexography printing, the radiation-curable protective varnish of the invention on a surface of the substrate and/or a surface of the one or more security features of the security document to form a varnish layer; and
**ii)** curing the varnish layer by exposure to UV light to form a protective coating covering the surface of the substrate and/or the surface of the one or more security features of the security document.

The security document according to the present invention may comprise on at least one of its sides a protective coating-free region of between about 5 and about 15% of the substrate surface, the percentages being based on the total surface of the at least one of the sides of the security document. Preferably, said protective coating-free region is present on at least one edge or corner of the substrate. The protective coating-free region may be used for example for numbering the security document. If the security document is a banknote, the coating-free region may be additionally used for adsorbing a staining (indelible) ink used for protecting banknotes against theft and robbery as described in WO2013127715A2.

A further aspect according to the present invention is directed to a protective coating for a security document comprising a substrate, and optionally one or more security features applied on or inserted into a portion of the substrate, wherein the protective coating is obtained from the radiation-curable protective varnish of the invention. Specifically, the above-mentioned protective coating is obtained by:

i) applying, preferably by a printing method selected from flexography printing, inkjet printing, and screen-printing, more preferably by flexography printing, the radiation-curable protective varnish of the invention on a surface of the substrate and/or a surface of the one or more security features of the security document to form a varnish layer; and
ii) curing the varnish layer by exposure to UV light to form a protective coating covering the surface of the substrate and/or the surface of the one or more security features of the security document.

**Preferred embodiments of the invention**

1. A radiation-curable protective varnish comprising:

a) from about 25 wt% to about 95 wt%, preferably from about 30 wt% to about 85 wt%, more preferably from about 35 wt% to about 75 wt% of a mixture of (meth)acrylates, other than polysiloxanes, selected from those having a (meth)acrylate functionality of two or more, preferably a mixture of di(meth)acrylates and tri(meth)acrylates;
b) from about 0.5 wt% to about 5 wt% of a (meth)acrylated polysiloxane having a number average molecular weight between about 1,000 and about 8,000 g/mol eq PS;
c) from about 0.5 wt% to about 5 wt% of a (meth)acrylated polysiloxane having a number average molecular weight between about 10,000 and about 20,000 g/mol eq PS;
d) from about 2 wt% to about 12 wt%, preferably from about 5 wt% to about 10 wt% of one or more free-radical photoinitiators;

wherein the wt%'s are based on the total weight of the radiation-curable protective varnish.

2. The radiation-curable protective varnish of embodiment 1, wherein the mixture of (meth)acrylates a) comprises di(meth)acrylates, tri(meth)acrylates and/or tetra(meth)acrylates selected from ethylene glycol diacrylate (CAS no. 2274-11-5); 1,4-butanediol diacrylate (CAS no. 1070-70-8); *1,3*-butanediol *diacrylate* (CAS no. 19485-03-*1*); 2-methyl-1,3-propanediol diacrylate (CAS no. 86168-86-7), 3-methyl-1,5-pentanediol diacrylate (CAS no. 64194-22-5); 2-butyl-2-ethyl-1,3-propanediol *diacrylate* (CAS no. 67019-04-9), 1,6-hexanediol diacrylate (CAS no. 13048-33-4); neopentyl glycol diacrylate (CAS no. 2223-82-7); *1,9-nonanediol diacrylate (*CAS no. 107481-28-7); ethoxylated 1,6-hexanediol diacrylates (CAS no. 84170-27-4); propoxylated 1,6-hexanediol diacrylates (CAS no. 84170-73-0); propoxylated neopentyl glycol diacrylate (CAS no. 84170-74-1); ethoxylated 2-methyl-1,3-propanediol diacrylate (CAS no. 634592-28-2); tricyclodecanedimethanol diacrylate (CAS no. 42594-17-2); diethylene glycol diacrylate (CAS no. 4074-88-8); dipropylene glycol diacrylate (CAS no. 57472-68-1); triethylene glycol diacrylate (CAS no. 1680-21-3); tripropylene glycol diacrylate (CAS no. 42978-66-5); tetraethylene glycol diacrylate (CAS no. 17831-71-9); polyethylene glycol 200/400 diacrylates (CAS no. 26570-48-9); and ethoxylated (EO2/EO3/EO4/EO10) bisphenol A diacrylates (CAS no. 64401-02-1), ethylene glycol di(meth)acrylate (CAS no. 97-90-5); 1,4-butanediol di(meth)acrylate (CAS no. 2082-81-7); *1,3*-butanediol *di(meth)acrylate* (CAS no. 1189-08-8); 1,6-hexanediol di(meth)acrylate (CAS no. 6606-59-3); neopentyl glycol di(meth)acrylate (CAS no. 1985-51-9); *1,9-nonanediol diacrylate (*CAS no. 107481-28-7); diethylene glycol di(meth)acrylate (CAS no. 2358-84-1); triethylene glycol di(meth)acrylate (CAS no. 109-16-0); tetraethylene glycol di(meth)acrylate (CAS no. 109-17-1); polyethylene glycol 200/400 di(meth)acrylate (CAS no. 25852-47-5); and ethoxylated (EO2/EO3/EO4/EO10) bisphenol A di(meth)acrylates (CAS no. 41637-38-1), trimethylolpropane triacrylates, trimethylolpropane tri(meth)acrylates, alkoxylated trimethylolpropane triacrylates, alkoxylated trimethylolpropane tri(meth)acrylates, alkoxylated glycerol triacrylates, pentaerythritol triacrylates, alkoxylated pentaerythritol triacrylates and mixtures thereof, preferably selected from the group consisting of trimethylolpropane triacrylates, alkoxylated trimethylolpropane triacrylates, alkoxylated glycerol triacrylates, pentraerythritol triacrylates, ditrimethylolpropane tetraacrylates, pentraerythritol tetraacrylates, alkoxylated pentaerythritol tetraacrylates, and mixtures thereof.

3. The radiation-curable protective varnish of embodiment 1 or 2, wherein the mixture of (meth)acrylates a) additionally comprises urethane (meth)acrylate oligomers, polyester (meth)acrylate oligomers, polyether based (meth)acrylate oligomers, amine modified polyether based (meth)acrylate oligomers or epoxy (meth)acrylate oligomers, preferably urethane (meth)acrylate oligomers and epoxy (meth)acrylate oligomers, and mixtures thereof.

4. The radiation-curable protective varnish of embodiment 1, 2 or 3, wherein the mixture of (meth)acrylates a) comprises at least one acrylated oligoamine, preferably having an acrylate functionality of about 2.

5. The radiation-curable protective varnish of any one preceding embodiment, comprising:

a1) from about 25 wt% to about 65 wt%, preferably from about 35 wt% to about 50 wt% of one or more tri(meth) acrylate monomers having a molecular weight less than about 700 g/mol eq PS;
a2) from about 5 wt% to about 25 wt%, preferably from about 8 wt% to about 20 wt%, of one or more di(meth) acrylate monomers having a molecular weight of less than about 700 g/mol eq PS;
a3) from about 15 wt% to about 40 wt%, preferably from about 20 wt% to about 30 wt% of one or more oligomers bearing two or more (meth)acrylate moieties, and having a molecular weight of greater than or equal to about 700 g/mol eq PS;
b) from about 0.5 wt% to about 5 wt% of a (meth)acrylated polysiloxane having a number average molecular weight between about 1,000 and about 8,000 g/mol eq PS;
c) from about 0.5 wt% to about 5 wt% of a (meth)acrylated polysiloxane having a number average molecular weight between about 10,000 and about 20,000 g/mol eq PS;
d) from about 2 wt% to about 12 wt%, preferably from about 5 wt% to about 10 wt% of one or more free-radical photoinitiators;

wherein the wt%'s are based on the total weight of the radiation-curable protective varnish.

6. The radiation-curable protective varnish of any one preceding embodiment, wherein the one or more tri(meth) acrylate monomers having a molecular weight less than about 700 g/mol eq PS is a propoxylated glycerol triacrylate.

7. The radiation-curable protective varnish of any one preceding embodiment, wherein the one or more di(meth) acrylate monomers having a molecular weight of less than about 700 g/mol eq PS is selected from compounds of Formula I:

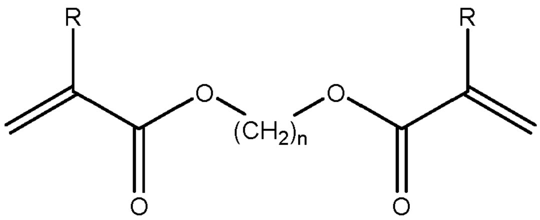

(I)

wherein R is H or $CH_3$, and n is an integer from 3 to 14, preferably from 4 to 8, particularly preferably 6, and preferably R is H.

8. The radiation-curable protective varnish of embodiment 7, wherein R is H and n is 4 to 8, preferably n is 6.

9. The radiation-curable protective varnish of any one preceding embodiment, wherein the one or more oligomers bearing two or more (meth)acrylate moieties, and having a molecular weight of greater than or equal to about 700 g/mol eq PS comprises a (meth)acrylated epoxy resin.

10. The radiation-curable protective varnish of any one preceding embodiment, wherein the one or more oligomers bearing two or more (meth)acrylate moieties, and having a molecular weight of greater than or equal to about 700 g/mol eq PS comprises a (meth)acrylated oligoamine resin having an acrylate functionality of 2 or more.

11. The radiation-curable protective varnish of any one preceding embodiment, comprising from about 7 wt% to about 20 wt% of a (meth)acrylated epoxy resin having a number average molecular weight of greater than or equal to about 700 g/mol eq PS and from about 7 wt% to about 20 wt% of a (meth)acrylated oligoamine resin having an acrylate functionality of 2 or more.

12. The radiation-curable protective varnish of any one preceding embodiment, wherein the (meth)acrylate group-bearing polysiloxane having a number average molecular weight between about 1,000 and about 8,000 g/mol eq PS is selected from non-ionic surfactants comprising a silicone backbone containing randomly distributed recurring units selected from di(methyl)siloxane
(-$(CH_3)_2$SiO-) and/or methyl-($C_2$-$C_{10}$-alkyl)-siloxane (-$(CH_3)$($C_2$-$C_{10}$-alkyl)SiO-), wherein one or more methyl groups and/or $C_2$-$C_{10}$-alkyl groups may be independently of each other substituted by an aryl group, a polyester, and presenting one or more terminal (meth)acrylate groups, wherein the silicone backbone may be connected directly or *via* a spacer to the one or more terminal (meth)acrylate groups.

13. The radiation-curable protective varnish of any one preceding embodiment, wherein the (meth)acrylate group-bearing polysiloxane having a number average molecular weight between about 10,000 and about 20,000 g/mol eq PS is selected from non-ionic surfactants comprising a silicone backbone containing randomly distributed recurring units selected from di(methyl)siloxane
(-$(CH_3)_2$SiO-) and/or methyl-($C_2$-$C_{10}$-alkyl)-siloxane (-$(CH_3)$($C_2$-$C_{10}$-alkyl)SiO-), wherein one or more methyl groups and/or $C_2$-$C_{10}$-alkyl groups may be independently of each other substituted by an aryl group, a polyester, and presenting one or more terminal (meth)acrylate groups, wherein the silicone backbone may be connected directly or *via* a spacer to the one or more terminal (meth)acrylate groups.

14. The radiation-curable protective varnish of any one preceding embodiment, wherein the (meth)acrylate group-bearing polysiloxane having a number average molecular weight between about 1,000 and about 8,000 g/mol eq PS is an acrylate-bearing polysiloxane.

15. The radiation-curable protective varnish of any one preceding embodiment, wherein the (meth)acrylate group-bearing polysiloxane having a number average molecular weight between about 1,000 and about 8,000 g/mol eq PS has a (meth)acrylate functionality of from about 1 to about 4, preferably about 2.

16. The radiation-curable protective varnish of any one preceding embodiment, wherein the (meth)acrylate group-bearing polysiloxane having a number average molecular weight between about 1,000 and about 8,000 g/mol eq PS has a molecular weight between about 2,000 and about 7,500 g/mol, preferably between about 3,000 and about 7,000 g/mol.

17. The radiation-curable protective varnish of any one preceding embodiment, wherein the (meth)acrylate group-bearing polysiloxane having a number average molecular weight between about 1,000 and about 8,000 g/mol eq PS is selected from mono(meth)acrylates, di(meth)acrylates, tri(meth)acrylates and tetra(meth)acrylates, having a molecular weight between about 2,000 and about 7,500 g/mol eq PS, preferably between about 3,000 and about 7,000 g/mol eq PS.

18. The radiation-curable protective varnish of any one preceding embodiment, wherein the (meth)acrylate group-bearing polysiloxane having a number average molecular weight between about 1,000 and about 8,000 g/mol eq PS has a molecular weight of about 6,522 g/mol eq PS.

19. The radiation-curable protective varnish of any one preceding embodiment, wherein the (meth)acrylate group-bearing polysiloxane having a number average molecular weight between about 1,000 and about 8,000 g/mol eq PS is a polyester-modified, acrylate-functionalized polydimethylsiloxane, having a molecular weight of about 6,522 g/mol eq PS.

20. The radiation-curable protective varnish of any one preceding embodiment, wherein the (meth)acrylate group-bearing polysiloxane having a number average molecular weight between about 1,000 and about 8,000 g/mol eq PS is present at about 2 to about 5 wt%, based on the total weight of the radiation-curable protective varnish.

21. The radiation-curable protective varnish of any one preceding embodiment, wherein the (meth)acrylate group-bearing polysiloxane having a number average molecular weight between about 10,000 and about 20,000 g/mol eq PS is an acrylate-bearing polysiloxane.

22. The radiation-curable protective varnish of any one preceding embodiment, wherein the (meth)acrylate group-bearing polysiloxane having a number average molecular weight between about 10,000 and about 20,000 g/mol eq PS has a molecular weight between about 11,000 and about 18,000 g/mol eq PS, preferably between about 12,000 and about 15,000 g/mol eq PS.

23. The radiation-curable protective varnish of any one preceding embodiment, wherein the (meth)acrylate group-bearing polysiloxane having a number average molecular weight between about 10,000 and about 20,000 g/mol eq PS has a (meth)acrylate functionality of from about 1 to about 4, preferably about 2.

24. The radiation-curable protective varnish of any one preceding embodiment, wherein the (meth)acrylate group-bearing polysiloxane having a number average molecular weight between about 10,000 and about 20,000 g/mol eq PS has a molecular weight of about 13,906 g/mol eq PS.

25. The radiation-curable protective varnish of any one preceding embodiment, wherein the (meth)acrylate group-bearing polysiloxane having a number average molecular weight between 10,000 and 20,000 g/m is siloxanes and silicones, di-Me, 3-[2-hydroxy-3-[(1-oxo-2-propenyl)oxy]propoxy]propyl Me (CAS Nr: 136753-21-4), with molecular weight of 13,906 g/mol eq PS, and an acrylate functionality of about 2.

26. The radiation-curable protective varnish of any one preceding embodiment, wherein the (meth)acrylate group-bearing polysiloxane having a number average molecular weight between about 10,000 and about 20,000 g/mol eq PS is present at a range between 0.5 wt% and 2 wt%.

27. The radiation-curable protective varnish of any one preceding embodiment, wherein the free-radical photoinitiator is selected from the group consisting of hydroxyketones (e.g. alpha-hydroxyketones), alkoxyketones (e.g. alpha-alkoxyketones), acetophenones, benzophenones, ketosulfones, benzyl ketals, benzoin ethers, phosphine oxides, phenylglyoxylates, thioxanthones and mixtures thereof.

28. The radiation-curable protective varnish of any one preceding embodiment, additionally comprising one or more amine synergists.

29. The radiation-curable protective varnish of any one preceding embodiment, wherein the molecular weights of the polysiloxanes are measured by GPC (gel permeation chromatography) according to OECD test method 118.

30. A process for coating a security document comprising a substrate and optionally one or more security features applied on or inserted into a portion of the substrate, wherein said process comprises the following steps:

**i)** applying, preferably by a printing method selected from flexography printing, inkjet printing, and screen-printing, the radiation-curable protective varnish as recited in any one of embodiments 1 to 27 on a surface of the substrate and/or a surface of the one or more security features of the security document to form an un-cured varnish layer; and
**ii)** curing the un-cured varnish layer by exposure to UV light to form a protective coating covering the surface of the substrate and/or the surface of the one or more security features of the security document.

## EXAMPLES

The present invention is now described in more detail with reference to the following nonlimiting examples. The examples and comparative examples below provide more details for the preparation of the radical-curing protective varnishes according to the invention.

**Table 1A. Surfactants/polysiloxanes used in the radical-curing varnishes of the invention and comparative varnishes**

| Commercial name (supplier) | Chemical name (CAS number) |
|---|---|
| Fluorolink® AD 1700 (Solvay) | 70 wt% perfluoropolyether-urethane acrylate copolymer in 15 wt% butyl acetate (CAS 123-86-4) and 15 wt% ethyl acetate (CAS 141-78-6)<br>Molecular weight (supplier): 1,500g/mol |
| BYK-UV 3570 (BYK) | 70 wt% polyester-modified acrylate-functionalizedized polydimethylsiloxane (CAS not provided) in 30 wt% propoxylated neopentylglycol diacrylate (CAS No: 84170-74-1)<br>Molecular weight ($M_n$): 6,522 g/mol eq PS (GPC according to OECD test method 118)<br>Acrylate functionality = 2 |
| Silmer® OH ACR C-50 (Siltech) | a high molecular weight multi-functional silicone acrylate pre-polymer<br>Siloxanes and Silicones, di-Me, 3-[2-hydroxy-3-[(1-oxo-2-propenyl)oxy]propoxy] propyl Me (CAS No: 136753-21-4)<br>Molecular weight ($M_n$): 13,906 g/mol eq PS (GPC according to OECD test method 118)<br>Acrylate functionality = 1.96 |

The number average molecular weights ($M_n$) of the polysiloxanes were determined by GPC (gel permeation chromatography) according to OECD test method 118. A Malvern Viskotek GPCmax was used. The device was equipped with an isocratic pump, a degasser, an autosampler and a triple detector TDA 302 comprising a differential refractometer, a viscosimeter and a double-angle light scattering detector (7° and 90°). A calibration curve [log(molecular mass) vs f(retention volume)] was established using six polystyrene standards (with molecular masses ranging from 472 to 512,000 g/mol) and *n*-hexylbenzene being used for as the standard for the smallest molecular mass (M = 162 g/mol). The equation of the calibration curve was as follows:

$$y = -0.3218x + 10.25 \ (R^2 = 0.9977)$$

with y = log(molecular mass) and x = retention volume in ml.

Two columns Viskotek TM4008L (column length 30.0 cm, internal diameter 8.0 mm) were coupled in series. The stationary phase was a styrene-divinylbenzene copolymer with a particle size of 6 μm and a maximum pore size of 3000 Å. During the measurement, the temperature was fixed at 35°C. The analyzed samples contained 10 mg/mL of polysiloxane dissolved in THF, and were injected at a rate of 1 mL/min. The molecular mass of the polysiloxane was calculated from the chromatogram as a polystyrene-equivalent number average molecular weight (PS eq $M_n$) using the following formula:

$$M_n = \frac{\sum_{i=1}^{n} H_i M_i}{\sum_{i=1}^{n} H_i}$$

where $H_i$ is the level of the detector signal (differential refractometer) from the baseline for the retention volume $V_i$, $M_i$ is the

molecular mass of the polymer fraction at the retention volume $V_i$, and $n$ is number of data points. Omnisec 5.12, as provided with the device, was used as software.

| Table 1B. Other ingredients | | |
|---|---|---|
| **Ingredient** | **Commercial name (supplier)** | **Chemical name (CAS number)** |
| Radical monomer | Ebecryl® 53 (Allnex) | Propoxylated glycerol triacrylate (CAS No: 52408-84-1), calculated molecular weight: 455.50 g/mol 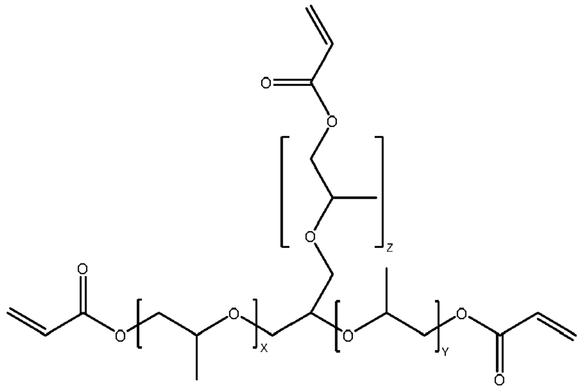 **x + y + z ≈ 3.5** |
| | HDDA (Allnex) | Hexamethylene diacrylate (CAS No: 13048-33-4) Calculated molecular weight: 226.27 g/mol |

| Table 1B. Other ingredients | | |
|---|---|---|
| **Ingredient** | **Commercial name (supplier)** | **Chemical name (CAS number)** |
| Radical oligomer | Ebecryl® 2959 (Allnex) | Acrylated epoxy resin 23% glycerol propoxylated triacrylate (CAS No: 52408-84-1) + 77% bisphenol-A epoxy acrylate oligomer (CAS No: 55818-57-0) Number average molecular weight ($M_n$): 833 eq PS (GPC according to OECD test method 118) |
| | Genomer® 5275 (Rahn) | Acrylated oligoamine resin (functionality 2) (CAS No: 410074-70-3) Number average molecular weight (Mn): 1,804 g/mol eq PS (GPC according to OECD test method 118) |
| Photoinitiator | Omnirad® 1173 (IGM Resins) | 2-hydroxy-2-methylpropiophenone (CAS No: 7473-98-5) |
| | Speedcure® TPO-L (Lambson) | Ethyl phenyl(2,4,6-trimethylbenzoyl)phosphinate (CAS No: 84434-11-7) |
| | Genocure® DETX (Rahn) | 2,4-diethyl-9H-thioxanthen-9-one (CAS No: 82799-44-8) |
| Antifoam agent | TEGO® AIREX 900 (Evonik) | Siloxanes and Silicones, di-Me, reaction products with silica (CAS No: 67762-90-7) |
| Matting agent | ACEMATT® TS 100 (Evonik) | Silica, amorphous, fumed, crystal-free (CAS No: 112945-52-5) |
| Solvent | n-butanol (BRENNTAG) | Butan-1-ol (CAS No: 71-36-3) |

## A. Preparation of radical-curing protective varnishes (E1-E6) and comparative varnishes (C1-C3)

100g of each of the radical-curing protective varnishes according to the invention (E1-E6) and the comparative varnishes (C1-C3) were prepared by first pre-mixing the monomers and oligomers listed in Table 2 using a Dispermat (model CV-3) (5 min at 1,500 rpm), then adding and dispersing the matting agent for about 25 minutes at 1,500 rpm and finally adding the other ingredients and the surfactants and mixing the so-obtained mixture for about 15 minutes at 1,500 rpm.

The viscosities of the radical-curing varnishes were measured at 25°C on a Brookfield viscometer (model "DV-I Prime", spindle S21 at 100 rpm) and reported in Table 2. The varnishes are particularly well suited to industrial printing using a flexographic equipment.

**Table 2. Compositions of the radical-curing protective varnishes E1-E6 and comparative varnishes C1-C3**

| Ingredient | Commercial name | C1 | C2 | C3 | E1 | E2 | E3 | E4 | E5 | E6 |
|---|---|---|---|---|---|---|---|---|---|---|
| | | Amount [wt%] | | | | | | | | |
| Radical monomer | Ebecryl 53 | 38.0 | | | 36.0 | 38.0 | 39.0 | 40.0 | 38.0 | |
| | HDDA | 15.0 | | | | | | | | |
| Radical oligomer | Ebecryl 2959 | 13.5 | | | | | | | | |
| | Genomer 5275 | 13.5 | | | | | | | | |
| Surfactant/ polysiloxane | BYK-UV 3570 $M_n$ = 6,522 g/mol eq PS | | 4.0 | | 3.0 | 2.0 | 1.5 | 1.0 | 1.0 | 3.0 |
| | Silmer OH ACR C-50 $M_n$ = 13,906 g/mol eq PS | | | 4.0 | 3.0 | 2.0 | 1.5 | 1.0 | 3.0 | 1.0 |
| | Fluorolink® AD 1700 | 4.0 | | | | | | | | |
| Antifoam agent | TEGO AIREX 900 | 0.5 | | | | | | | | |
| Matting agent | ACEMATT TS 100 | 3.5 | | | | | | | | |
| Solvent | n-butanol | 4.0 | | | | | | | | |
| Photoinitiator | Omnirad 1173 | 2.5 | | | | | | | | |
| | SpeedCure TPO-L | 5.0 | | | | | | | | |
| | Genocure DETX | 0.5 | | | | | | | | |
| Total | | 100.0 | | | | | | | | |
| Viscosity [mPas] @ 25°C | | 264 | 294 | 264 | 308 | 275 | 268 | 263 | 276 | 286 |
| Coat weight [g/m$^2$] | LED 385 nm | 2.1 | 2.1 | 2.1 | 2.2 | 2.2 | 2.2 | 2.1 | 2.2 | 2.2 |
| | Hg 180 W/cm | 2.1 | 2.0 | 2.0 | 2.1 | 2.1 | 2.1 | 2.0 | 2.0 | 2.0 |

## B. Preparation of protective layers

The radical-curing protective varnishes E1-E6 according to the invention and the comparative varnishes C1-C3 were independently applied on a piece of fiduciary cotton substrate (BNP paper from Louisenthal, 100 g/m$^2$) so as to form wet protective layers having a thickness of 2-3 μm (as reported in Table 2) by a laboratory pilot flexo printing unit (N. Schläfli Maschinen) with an anilox (160 l/m, 8 cm$^3$/m$^2$) and a rubber printing cylinder of 65-75 Shores.

At the end of the application process, the protective layers were cured in-line using two different processes:

- on-line UV dryer (system VPC-20 supplied by GEW) comprising a standard mercury UV lamp (ref 14957) at a power of 100% (180W/cm) and a conveyor speed of 50 m/min; OR
- UV-LED lamp (EXCELITAS (Canada) Omnicure AC575-385-SR, 385nm, 14 Wcm$^2$, 50m/min, 100%)

The conditions used for curing the coated substrates are similar to the curing conditions expected in an industrial environment.

The coat weight reported in Table 2 was measured by applying and curing (using both curing processes) the protective varnishes E1-E6 according to the invention and the comparative varnishes C1-C3 on three bands (dimensions 40 cm x 6 cm) of fiduciary polymer substrate (Guardian™, CCL Secure) and independently weighing the cured coated substrate on an analytical balance (Mettler Toledo Suisse / XS64). The difference with the uncoated substrate provided the coat weight and the average of the three measurements was reported in Table 2, for mercury and LED curing.

## C. Assessment of performance

The protective layers obtained as described above were independently tested for three performance criteria:
- blue ink test: pieces of each substrate carrying the radiation-cured protective layers obtained from the varnishes E1-E6 according to the invention and the comparative varnishes C1-C3 and having the dimensions 7.2 cm x 13.2 cm were independently soaked for 30 seconds in a solution of Pelikan ink (royal blue 4001 diluted at 40 wt% in deionized water) at a temperature of 23°C. The blue ink was washed away with deionized water then placed between two glass plates in an oven at 60°C for about 12 hours. The ink remaining on the substrate was visually inspected. The performance was evaluated as follows and reported in Table 3:

| Visual observation | Assessment | Protective effect |
|---|---|---|
| Blue spots cover a very large surface | 1 | Poor |
| Blue spots cover a large surface | 2 | Insufficient |
| Blue spots cover a limited surface | 3 | Adequate |
| Blue spots cover a small surface | 4 | Good |
| Blue spots are few and far between | 5 | Excellent |

- rubbing test: pieces of substrate (cured using LED 385 nm or Hg) carrying the radiation cured protective layers obtained from the varnishes E1-E6 according to the invention and comparative varnishes C1-C3 and having the dimensions 7.2 x 6.0 cm were independently pasted using double surface adhesive tape (3M/Scotch® double-sided) on a glass plate. The glass plate carrying the tested sample was placed in an automatic rubbing machine (Zehntner ZAA 2600) equipped with a rubber pad (dimensions 5.9 cm x 3.9 cm) on which a piece of blank substrate (BNP paper from Louisenthal, 100 g/$m^2$) has been attached. The piece of blank substrate was therefore in direct contact with the tested protective layer. A steel weight of 0.5 kg was placed on the rubber pad (such that the total weight was about 0.65 kg) and the rubber pad underwent a back-and-forth movement, lengthwise with respect to the tested sample at a rate of 42 cycles/minute for 800 cycles. The distance of the movement was such that at each movement, the rubber pad stopped 5 mm from the edge of the tested sample. After rubbing, the tested samples were independently submitted to the blue ink test (as described above) and a visual comparison of the soiling performance between the pristine protective layer (0 cycle of rubbing) and the worn out one (800 cycles of rubbing) was carried out. The performance was reported in Table 3 using the following evaluation scale:

| **Visual observation** | **Assessment** | **Conclusion** |
|---|---|---|
| The surface of the tested sample is covered in blue, essentially as lines along the direction of rubbing (i.e. in the length direction of the tested samples) after 800 cycles | poor | The protective effect is lost when the protective layer wears out |
| The number of blue spots is significantly higher after 800 cycles | adequate | The protective effect is reduced but remains adequate when the protective layer wears out |
| The number of blue spots is slightly higher after 800 cycles | good | The protective effect is reduced but remains good when the protective layer wears out |
| There is almost no difference visible after 800 cycles | optimal | The protective effect stays more or less the same when the protective layer wears out |

- overmarking test: pieces of each substrate carrying the radiation cured protective layers obtained from the varnishes

E1 to E6 according to the invention and comparative varnishes C1-C3 and having the dimensions 7.2 cm x 6.0 cm were independently marked in the middle using a magenta Stabilo pen. After drying, the Stabilo mark was removed with a white cotton cloth, and the remaining trace of magenta color was visually assessed using the following evaluation scale:

| Visual observation | Assessment | Conclusion |
|---|---|---|
| A very visible mark subsists | poor | The protective layer is easy to overmark |
| A slight trace of the mark subsists | adequate | The protection against overmarking is adequate |
| A faint trace of the mark susbsists | good | The protection against overmarking is good |
| There is almost no visible mark subsisting | optimal | The protection against overmarking is excellent |

The results of the blue ink test (protective varnishes of the invention E1-E6 and comparative varnishes C1-C4), of the rubbing test (protective varnishes of the invention E2, E4 and comparative varnish C2) and of the overmarking test (protective varnishes of the invention E2, E4 and comparative varnish C2) are reported in Table 3. The final assessment in Table 3 is the summary of all tested items, a "passed" assessment meaning that all performance criteria were met and a "failed" assessment meaning that at least one of the performance criteria was not met. Since the protective varnishes are intended to be cured by LED and/or mercury lamps, all performance criteria have to be met with both curing systems.

**Table 3. Performance of radical-curing protective varnishes E1-E6 and comparative varnishes C1-C3**

| Ex. | Surfactants | Blue ink test | | Rubbing test | | Overmarking test | | Final assessment |
|---|---|---|---|---|---|---|---|---|
| | | LED | Hg | LED | Hg | LED | Hg | |
| C1 | Fluorolink® AD 1700 (4 wt%) | 5 | 5 | adequate | poor | poor | good | fail |
| C2 | BYK-UV 3570 (4 wt%) | 4.5 | 4.5 | adequate | poor | poor | adequate | fail |
| C3 | Silmer OH ACR C-50 (4 wt%) | 1.5 | 2 | n.d.[1] | n.d. | n.d. | n.d. | fail |
| E1 | BYK-UV 3570 (3 wt%) + Silmer OH ACR C-50 (3 wt%) | 3.5 | 4 | good | good | good | optimal | pass |
| E2 | BYK-UV 3570 (2 wt%) + Silmer OH ACR C-50 (2 wt%) | 3.5 | 3.5 | good | adequate | good | optimal | pass |
| E3 | BYK-UV 3570 (1.5 wt%) + Silmer OH ACR C-50 (1.5 wt%) | 3.5 | 3.5 | adequate | adequate | adequate | good | pass |
| E4 | BYK-UV 3570 (1 wt%) + Silmer OH ACR C-50 (1 wt%) | 3 | 3 | adequate | adequate | adequate | adequate | pass |
| E5 | BYK-UV 3570 (1 wt%) + Silmer OH ACR C-50 (3 wt%) | 3 | 3 | adequate | adequate | good | good | pass |
| [1] n.d.= not done | | | | | | | | |
| E6 | BYK-UV 3570 (3 wt%) + Silmer OH ACR C-50 (1 wt%) | 3.5 | 4 | adequate | adequate | adequate | adequate | pass |

Comparative protective varnish C1 has excellent protective effect, as shown by the results of the blue ink test, but it comprises an acrylated perfluoropolyether surfactant (i.e. a PFAS) which is disfavored due to alleged HSE issues. It shows

poor results for the rubbing test and for the overmarking test, at least for one of the curing conditions. Comparative protective varnish C2, which comprises an acrylated polysiloxane having a number average molecular weight of 6,522 g/mol eq PS (i.e. between about 1,000 and about 8,000 g/mol eq PS), has good protective effect just after application and curing but the protective effect of the cured layer shows poor durability in the rubbing test, and would not last long in actual circulation, particularly when a mercury lamp is used for curing. Furthermore, the overmarking performance is poor when a LED lamp is used for curing. Comparative protective varnish C3, which comprises an acrylated polysiloxane having a number average molecular weight of 13,906 g/mol eq PS (i.e. a molecular weight between about 10,000 and about 20,000 g/mol eq PS), has poor protective effect after application and curing. The protective varnishes of the invention E1-E6 (i.e. comprising between 0.5 wt% and 5 wt% of an acrylated silicone surfactant having a molecular weight between about 1,000 and about 8,000 g/mol eq PS and between 0.5 wt% and 5 wt% of an acrylated silicone surfactant having a molecular weight between about 10,000 and about 20,000 g/mol eq PS) exhibited adequate to good protective effect after application and curing. The results of the rubbing test indicate that, even for the lowest total amount of surfactants (E4), the protective effect would remain adequate upon wearing out of the protective layer in actual circulation. The results of the overmarking test indicate that, even for the lowest total amount of surfactants (E4), the protection against overmarking is adequate to optimal.

## Claims

**1.** A radiation-curable protective varnish comprising:

a) from about 25 wt% to about 95 wt%, preferably from about 30 wt% to about 85 wt%, more preferably from about 35 wt% to about 75 wt% of a mixture of (meth)acrylates, other than polysiloxanes, selected from those having a (meth)acrylate functionality of two or more, preferably a mixture of di(meth)acrylates and tri(meth)acrylates;
b) from about 0.5 wt% to about 5 wt% of a (meth)acrylated polysiloxane having a number average molecular weight between about 1,000 and about 8,000 g/mol eq PS;
c) from about 0.5 wt% to about 5 wt% of a (meth)acrylated polysiloxane having a number average molecular weight between about 10,000 and about 20,000 g/mol eq PS;
d) from about 2 wt% to about 12 wt%, preferably from about 5 wt% to about 10 wt% of one or more free-radical photoinitiators;

wherein the wt%'s are based on the total weight of the radiation-curable protective varnish.

**2.** The radiation-curable protective varnish of embodiment 1, wherein the mixture of (meth)acrylates a) comprises di(meth)acrylates, tri(meth)acrylates and/or tetra(meth)acrylates selected from ethylene glycol diacrylate (CAS no. 2274-11-5); 1,4-butanediol diacrylate (CAS no. 1070-70-8); 1,3-butanediol *diacrylate* (CAS no. 19485-03-*1)*; 2-methyl-1,3-propanediol diacrylate (CAS no. 86168-86-7), 3-methyl-1,5-pentanediol diacrylate (CAS no. 64194-22-5); 2-butyl-2-ethyl-1,3-propanediol *diacrylate* (CAS no. 67019-04-9), 1,6-hexanediol diacrylate (CAS no. 13048-33-4); neopentyl glycol diacrylate (CAS no. 2223-82-7); *1,9-nonanediol diacrylate (CAS no.* 107481-28-7); ethoxylated 1,6-hexanediol diacrylates (CAS no. 84170-27-4); propoxylated 1,6-hexanediol diacrylates (CAS no. 84170-73-0); propoxylated neopentyl glycol diacrylate (CAS no. 84170-74-1); ethoxylated 2-methyl-1,3-propanediol diacrylate (CAS no. 634592-28-2); tricyclodecanedimethanol diacrylate (CAS no. 42594-17-2); diethylene glycol diacrylate (CAS no. 4074-88-8); dipropylene glycol diacrylate (CAS no. 57472-68-1); triethylene glycol diacrylate (CAS no. 1680-21-3); tripropylene glycol diacrylate (CAS no. 42978-66-5); tetraethylene glycol diacrylate (CAS no. 17831-71-9); polyethylene glycol 200/400 diacrylates (CAS no. 26570-48-9); and ethoxylated (EO2/EO3/EO4/EO10) bisphenol A diacrylates (CAS no. 64401-02-1), ethylene glycol di(meth)acrylate (CAS no. 97-90-5); 1,4-butanediol di(meth)acrylate (CAS no. 2082-81-7); *1,3*-butanediol *di(meth)acrylate* (CAS no. 1189-08-8); 1,6-hexanediol di(meth)acrylate (CAS no. 6606-59-3); neopentyl glycol di(meth)acrylate (CAS no. 1985-51-9); *1,9-nonanediol diacrylate (CAS no.* 107481-28-7); diethylene glycol di(meth)acrylate (CAS no. 2358-84-1); triethylene glycol di(meth)acrylate (CAS no. 109-16-0); tetraethylene glycol di(meth)acrylate (CAS no. 109-17-1); polyethylene glycol 200/400 di(meth)acrylate (CAS no. 25852-47-5); and ethoxylated (EO2/EO3/EO4/EO10) bisphenol A di(meth)acrylates (CAS no. 41637-38-1), trimethylolpropane triacrylates, trimethylolpropane tri(meth)acrylates, alkoxylated trimethylolpropane triacrylates, alkoxylated trimethylolpropane tri(meth)acrylates, alkoxylated glycerol triacrylates, pentaerythritol triacrylates, alkoxylated pentaerythritol triacrylates and mixtures thereof, preferably selected from the group consisting of trimethylolpropane triacrylates, alkoxylated trimethylolpropane triacrylates, alkoxylated glycerol triacrylates, pentraerythritol triacrylates, ditrimethylolpropane tetraacrylates, pentraerythritol tetraacrylates, alkoxylated pentaerythritol tetraacrylates, and mixtures thereof.

3. The radiation-curable protective varnish of embodiment 1 or 2, wherein the mixture of (meth)acrylates additionally comprises urethane (meth)acrylate oligomers, polyester (meth)acrylate oligomers, polyether based (meth)acrylate oligomers, amine modified polyether based (meth)acrylate oligomers or epoxy (meth)acrylate oligomers, preferably urethane (meth)acrylate oligomers and epoxy (meth)acrylate oligomers, and mixtures thereof.

4. The radiation-curable protective varnish of embodiment 1, 2 or 3, wherein the mixture of (meth)acrylates comprises at least one acrylated oligoamine, preferably having an acrylate functionality of about 2.

5. The radiation-curable protective varnish of any one preceding claim, wherein component a) comprises:

a1) from about 25 wt% to about 65 wt%, preferably from about 35 wt% to about 50 wt% of one or more tri(meth) acrylate monomers, other than polysiloxanes, having a molecular weight less than about 700 g/mol eq PS;
a2) from about 5 wt% to about 25 wt%, preferably from about 8 wt% to about 20 wt%, of one or more di(meth) acrylate monomers, other than polysiloxanes, having a molecular weight of less than about 700 g/mol eq PS;
a3) from about 15 wt% to about 40 wt%, preferably from about 20 wt% to about 30 wt% of one or more oligomers, other than polysiloxanes, bearing two or more (meth)acrylate moieties, and having a number average molecular weight of greater than or equal to about 700 g/mol eq PS; wherein the wt%'s are based on the total weight of the radiation-curable protective varnish.

6. The radiation-curable protective varnish of claim 5, wherein the one or more tri(meth)acrylate monomers having a molecular weight less than about 700 g/mol eq PS is selected from the group consisting of trimethylolpropane triacrylates, trimethylolpropane tri(meth)acrylates, alkoxylated trimethylolpropane triacrylates, alkoxylated trimethylolpropane tri(meth)acrylates, alkoxylated glycerol triacrylates, pentaerythritol triacrylates, alkoxylated pentaerythritol triacrylates and mixtures thereof, preferably selected from the group consisting of trimethylolpropane triacrylates, alkoxylated trimethylolpropane triacrylates, alkoxylated glycerol triacrylates, pentraerythritol triacrylates and mixtures thereof.

7. The radiation-curable protective varnish of claim 5 or 6, wherein the one or more tri(meth)acrylate monomers having a molecular weight less than about 700 g/mol eq PS is a propoxylated glycerol triacrylate.

8. The radiation-curable protective varnish of claim 5, wherein the one or more di(meth)acrylate monomers having a molecular weight of less than about 700 g/mol eq PS is selected from compounds of Formula I:

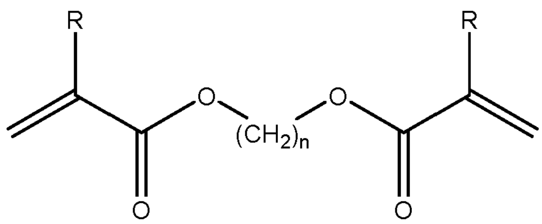

(I)

wherein R is H or $CH_3$, and n is an integer from 3 to 14, preferably from 4 to 8, more preferably 6, and preferably R is H.

9. The radiation-curable protective varnish of claim 8, wherein R is H and n is 4 to 8, preferably n is 6.

10. The radiation-curable protective varnish of any one preceding claim, wherein the mixture of (meth)acrylates comprises one or more oligomers, other than polysiloxanes, bearing two or more (meth)acrylate moieties, and having a number average molecular weight of greater than or equal to about 700 g/mol eq PS which is selected from (meth)acrylated epoxy resins.

11. The radiation-curable protective varnish of any one preceding claim, wherein the mixture of (meth)acrylates comprises one or more oligomers, other than polysiloxanes, bearing two or more (meth)acrylate moieties, and having a number average molecular weight of greater than or equal to about 700 g/mol eq PS which comprises a (meth)acrylated oligoamine resin having an acrylate functionality of 2 or more.

**12.** The radiation-curable protective varnish of any one preceding claim, wherein the (meth)acrylate group-bearing polysiloxane having a number average molecular weight between about 1,000 and about 8,000 g/mol eq PS is selected from non-ionic surfactants comprising a silicone backbone containing randomly distributed recurring units selected from di(methyl)siloxane ($-(CH_3)_2SiO-$) and/or methyl-($C_2$-$C_{10}$-alkyl)-siloxane ($-(CH_3)(C_2$-$C_{10}$-alkyl)SiO-), wherein one or more methyl groups and/or $C_2$-$C_{10}$-alkyl groups may be independently of each other substituted by an aryl group, a polyester, and presenting one or more terminal (meth)acrylate groups, wherein the silicone backbone may be connected directly or *via* a spacer to the one or more terminal (meth)acrylate groups.

**13.** The radiation-curable protective varnish of any one preceding claims, wherein the (meth)acrylate group-bearing polysiloxane having a number average molecular weight between about 10,000 and about 20,000 g/mol eq PS is selected from non-ionic surfactants comprising a silicone backbone containing randomly distributed recurring units selected from di(methyl)siloxane ($-(CH_3)_2SiO-$) and/or methyl-($C_2$-$C_{10}$-alkyl)-siloxane ($-(CH_3)(C_2$-$C_{10}$-alkyl)SiO-), wherein one or more methyl groups and/or $C_2$-$C_{10}$-alkyl groups may be independently of each other substituted by an aryl group, a polyester, and presenting one or more terminal (meth)acrylate groups, wherein the silicone backbone may be connected directly or *via* a spacer to the one or more terminal (meth)acrylate groups.

**14.** The radiation-curable protective varnish of any one preceding claim, wherein the (meth)acrylate group-bearing polysiloxane having a number average molecular weight between about 1,000 and about 8,000 g/mol eq PS has a molecular weight between about 2,000 and about 7,500 g/mol eq PS, preferably between about 3,000 and about 7,000 g/mol eq PS.

**15.** The radiation-curable protective varnish of any one preceding claim, wherein the (meth)acrylate group-bearing polysiloxane having a number average molecular weight between about 10,000 and about 20,000 g/mol eq PS has a molecular weight between about 11,000 and about 18,000 g/mol eq PS, preferably between about 12,000 and about 15,000 g/mol eq PS.

**16.** The radiation-curable protective varnish of any one preceding claim, wherein the (meth)acrylate group-bearing polysiloxane having a number average molecular weight between about 10,000 and about 20,000 g/mol eq PS and the (meth)acrylate group-bearing polysiloxane having a number average molecular weight between about 1,000 and about 8,000 g/mol eq PS independently have a (meth)acrylate functionality of from about 1 to about 4, preferably about 2.

**17.** The radiation-curable protective varnish of any one preceding claim, wherein the (meth)acrylate group-bearing polysiloxane having a number average molecular weight between about 1,000 and about 8,000 g/mol eq PS is present at a range between 2 wt% and 5 wt%.

**18.** The radiation-curable protective varnish of any one preceding claim, wherein the (meth)acrylate group-bearing polysiloxane having a number average molecular weight between about 10,000 and about 20,000 g/mol eq PS is present at a range between 0.5 wt% and 2 wt%.

Europäisches Patentamt
European Patent Office
Office européen des brevets

# EUROPEAN SEARCH REPORT

Application Number
EP 24 19 4742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/117198 A1 (MALIVERNEY CHRISTIAN [FR] ET AL) 11 April 2024 (2024-04-11) * claims; examples * | 1-18 | INV. C09D11/101 B41M3/14 |
| A | US 9 855 693 B2 (FUJIFILM CORP [JP]) 2 January 2018 (2018-01-02) * claims; examples * | 1-18 | |
| A | US 2019/092951 A1 (WANG LIAN [US] ET AL) 28 March 2019 (2019-03-28) * claims; examples * | 1-18 | |
| A | US 2023/340295 A1 (EBERHARDT MARC [DE] ET AL) 26 October 2023 (2023-10-26) * claims; examples * | 1-18 | |
| A | CN 107 286 735 A (CHUZHOU JQDK NEW MAT CO LTD) 24 October 2017 (2017-10-24) * claims; examples * | 1-15 | |
| A,D | WO 2014/067715 A1 (SICPA HOLDING SA [CH]) 8 May 2014 (2014-05-08) * claims; examples * | 1-18 | TECHNICAL FIELDS SEARCHED (IPC) C09D B41M |

The present search report has been drawn up for all claims

1

| Place of search | Date of completion of the search | Examiner |
|---|---|---|
| Munich | 10 January 2025 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 4742

This annex lists the patent family members relating to the patent documents cited in the above-mentioned European search report. The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| US 2024117198 A1 | 11-04-2024 | CA 3206866 A1 | 14-07-2022 |
| | | CN 116940602 A | 24-10-2023 |
| | | EP 4274856 A1 | 15-11-2023 |
| | | JP 2024502162 A | 17-01-2024 |
| | | KR 20230128120 A | 01-09-2023 |
| | | US 2024117198 A1 | 11-04-2024 |
| | | WO 2022148932 A1 | 14-07-2022 |
| US 9855693 B2 | 02-01-2018 | CN 104417111 A | 18-03-2015 |
| | | EP 2842763 A2 | 04-03-2015 |
| | | JP 5939644 B2 | 22-06-2016 |
| | | JP 2015047748 A | 16-03-2015 |
| | | US 2015064398 A1 | 05-03-2015 |
| US 2019092951 A1 | 28-03-2019 | CN 111417672 A | 14-07-2020 |
| | | EP 3694907 A1 | 19-08-2020 |
| | | US 2019092951 A1 | 28-03-2019 |
| | | WO 2019067604 A1 | 04-04-2019 |
| US 2023340295 A1 | 26-10-2023 | CN 116057140 A | 02-05-2023 |
| | | EP 4208511 A1 | 12-07-2023 |
| | | JP 7508699 B2 | 01-07-2024 |
| | | JP 2023539377 A | 13-09-2023 |
| | | KR 20230057463 A | 28-04-2023 |
| | | US 2023340295 A1 | 26-10-2023 |
| | | WO 2022049031 A1 | 10-03-2022 |
| CN 107286735 A | 24-10-2017 | NONE | |
| WO 2014067715 A1 | 08-05-2014 | AR 093100 A1 | 20-05-2015 |
| | | AU 2013339747 A1 | 02-04-2015 |
| | | BR 112015006556 A2 | 20-03-2018 |
| | | CA 2884872 A1 | 08-05-2014 |
| | | CL 2015001091 A1 | 07-08-2015 |
| | | CN 104870582 A | 26-08-2015 |
| | | CO 7400863 A2 | 30-09-2015 |
| | | DK 2912125 T3 | 13-02-2017 |
| | | EA 201590832 A1 | 31-08-2015 |
| | | EP 2912125 A1 | 02-09-2015 |
| | | ES 2614246 T3 | 30-05-2017 |
| | | HK 1213589 A1 | 08-07-2016 |
| | | HU E030494 T2 | 29-05-2017 |
| | | IL 238055 A | 29-05-2017 |
| | | JP 6183927 B2 | 23-08-2017 |
| | | JP 2015533904 A | 26-11-2015 |
| | | KR 20150073978 A | 01-07-2015 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 19 4742

This annex lists the patent family members relating to the patent documents cited in the above-mentioned European search report. The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| | | MX 366092 B | 27-06-2019 |
| | | MY 182933 A | 05-02-2021 |
| | | PH 12015500656 A1 | 11-05-2015 |
| | | PL 2912125 T3 | 28-04-2017 |
| | | PT 2912125 T | 03-01-2017 |
| | | SG 11201501959W A | 28-05-2015 |
| | | TW 201425401 A | 01-07-2014 |
| | | UA 113457 C2 | 25-01-2017 |
| | | US 2015259565 A1 | 17-09-2015 |
| | | WO 2014067715 A1 | 08-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013045496 A1
- WO 2014067715 A1
- WO 2011120917 A1
- WO 2013127715 A2

### Non-patent literature cited in the description

- *CHEMICAL ABSTRACTS*, 2274-11-5
- *CHEMICAL ABSTRACTS*, 1070-70-8
- *CHEMICAL ABSTRACTS*, 19485-03-1
- *CHEMICAL ABSTRACTS*, 86168-86-7
- *CHEMICAL ABSTRACTS*, 64194-22-5
- *CHEMICAL ABSTRACTS*, 67019-04-9
- *CHEMICAL ABSTRACTS*, 13048-33-4
- *CHEMICAL ABSTRACTS*, 2223-82-7
- *CHEMICAL ABSTRACTS*, 107481-28-7
- *CHEMICAL ABSTRACTS*, 84170-27-4
- *CHEMICAL ABSTRACTS*, 84170-73-0
- *CHEMICAL ABSTRACTS*, 84170-74-1
- *CHEMICAL ABSTRACTS*, 634592-28-2
- *CHEMICAL ABSTRACTS*, 42594-17-2
- *CHEMICAL ABSTRACTS*, 4074-88-8
- *CHEMICAL ABSTRACTS*, 57472-68-1
- *CHEMICAL ABSTRACTS*, 1680-21-3
- *CHEMICAL ABSTRACTS*, 42978-66-5
- *CHEMICAL ABSTRACTS*, 17831-71-9
- *CHEMICAL ABSTRACTS*, 26570-48-9
- *CHEMICAL ABSTRACTS*, 64401-02-1
- *CHEMICAL ABSTRACTS*, 97-90-5
- *CHEMICAL ABSTRACTS*, 2082-81-7
- *CHEMICAL ABSTRACTS*, 1189-08-8
- *CHEMICAL ABSTRACTS*, 6606-59-3
- *CHEMICAL ABSTRACTS*, 1985-51-9
- *CHEMICAL ABSTRACTS*, 2358-84-1
- *CHEMICAL ABSTRACTS*, 109-16-0
- *CHEMICAL ABSTRACTS*, 109-17-1
- *CHEMICAL ABSTRACTS*, 25852-47-5
- *CHEMICAL ABSTRACTS*, 41637-38-1
- *CHEMICAL ABSTRACTS*, 1115-20-4
- *CHEMICAL ABSTRACTS*, 136753-21-4
- *CHEMICAL ABSTRACTS*, 75980-60-8
- *CHEMICAL ABSTRACTS*, 7473-98-5
- *CHEMICAL ABSTRACTS*, 162881-26-7
- *CHEMICAL ABSTRACTS*, 84434-11-7
- *CHEMICAL ABSTRACTS*, 947-19-3
- *CHEMICAL ABSTRACTS*, 163702-01-0
- *CHEMICAL ABSTRACTS*, 24650-42-8
- **J. M. ADAMS** ; **P.A. DOLIN**. Printing Technology. Delmar Thomson Learning, 359-360
- **R.H. LEACH** ; **R.J. PIERCE**. The Printing Ink Manual. Springer, 58-62
- **J. M. ADAMS** ; **P.A. DOLIN**. Printing Technology. Delmar Thomson Learning, 293-328
- **H. KIPPHAN**. Handbook of Print Media. Springer, 409-422, 498-499
- **F. C. KREBS**. Solar Energy Materials & Solar Cells. 2009, vol. 93, 407
- **N. J. WILKINSON et al.** *The International Journal of Advanced Manufacturing Technology*, 2019, vol. 105, 4599-4619

- **P.V. RAJE** ; **N.C. MURMU**. *International Journal of Emerging Technology and Advanced Engineering*, 2014, vol. 4 (5), 174-183
- **F. C. KREBS**. *Solar Energy Materials & Solar Cells*, 2009, vol. 93, 405-406